# EUROPÄISCHE PATENTSCHRIFT

(11) **EP 3 058 249 B1**
(45) Veröffentlichungstag und Bekanntmachung des Hinweises auf die Patenterteilung: **28.03.2018**
(21) Anmeldenummer: 14771267.3
(22) Anmeldetag: 17.09.2014
(51) Int. Cl.: F16H 61/02

(54) **HYDRAULISCHE STEUERUNGSVORRICHTUNG FÜR EIN AUTOMATIKGETRIEBE**
HYDRAULIC CONTROL DEVICE FOR AN AUTOMATIC TRANSMISSION
DISPOSITIF DE COMMANDE HYDRAULIQUE POUR TRANSMISSION AUTOMATIQUE

(30) Priorität: 17.10.2013 DE 102013221038
(43) Veröffentlichungstag der Anmeldung: 24.08.2016
(73) Patentinhaber: ZF Friedrichshafen AG, 88046 Friedrichshafen (DE)
(72) Erfinder: HERRMANN, Markus, 88175 Scheidegg (DE); SCHMIDT, Thilo, 88074 Meckenbeuren (DE); ALLGAIER, Bernd, 88079 Kressbronn (DE)
(86) Internationale Anmeldenummer: PCT/EP2014/069757
(87) Internationale Veröffentlichungsnummer: WO 2015/055365

(56) Entgegenhaltungen:
- DE-A1-102013 209 569
- DE-C1- 4 124 384
- US-A1- 2005 205 138
- US-A1- 2006 091 340
- US-A1- 2013 281 253
- US-A1- 2013 341 152

## Beschreibung

Die Erfindung betrifft eine hydraulische Steuerungsvorrichtung nach dem Oberbegriff des Patentanspruchs 1, ein Automatikgetriebe nach Anspruch 15, sowie ein Verfahren zum Betreiben der hydraulischen Steuerungsvorrichtung.

Bei heutigen Automatikgetrieben, wie beispielsweise aus der DE 198 58 541 A1 bekannt, werden die Übersetzungsstufen durch Schaltelemente, d. h. Kupplungen oder Bremsen, ausgebildet als Lamellenschaltelemente oder Klauenschaltelemente, geschaltet. Die Schaltung erfolgt in der Regel hydraulisch, d. h. über Schalteinrichtungen in Form von Kolben/Zylinder-Einheiten, welche mit Drucköl beaufschlagt werden. Das Drucköl wird von einer Pumpe gefordert und über Ölzuführungen vom Getriebegehäuse über so genannte Drehölzuführungen, in die rotierende Getriebewelle und von dieser zu den Schalteinrichtungen geführt. Durch den Hydraulikkreislauf, d. h. die Leistung der Getriebeölpumpe, Dichtstellen, Druckabfall in den Zufuhrleitungen und Leckage entstehen Verluste, die den Getriebewirkungsgrad belasten. Das Problem dieser Erfindung besteht darin, die durch den Hydraulikkreislauf, insbesondere durch die Schaltung verursachte Verluste möglichst gering zu halten, um dadurch einen möglichst hohen Getriebewirkungsgrad zu erzielen. Ein besonderes Problem besteht darin, dass der Öldruck in einem Hydraulikzylinder bei einem geschlossenen Schaltelement, der so genannte Schließdruck, laufend nachgeführt, d. h. aufrecht erhalten werden muss, um das erforderliche Drehmoment in dem Schaltelement übertragen zu können. Dieser Druck muss von der Hydraulikpumpe, die vom Motor des Kraftfahrzeuges angetrieben wird, aufgebracht werden, wodurch Verluste verursacht werden, so dass sich die Erzeugung der hydraulischen Leistung den Kraftstoffverbrauch und damit CO_2-Emission erhöht, bzw. die zum Antrieb des Fahrzeugs breitstehende Energie verringert.

Durch die DE 102 05 411 A1 der Anmelderin wurde ein hydraulisch schaltbares Lamellenschaltelement bekannt, welches in geschlossenem Zustand, d. h. bei Drehmomentübertragung außerhalb der Schaltungen mechanisch durch eine Sperreinrichtung verriegelt wird. Dadurch wird die Anpresskraft zwischen den Lamellen aufrechterhalten, ohne dass ein hydraulischer Druck wirken muss, wodurch die Getriebeölpumpe entlastet wird. In einer nicht dargestellten Variante ist die Sperreinrichtung als Absperrventil ausgebildet, welches im Zufuhrbereich des Hydraulikzylinders angeordnet ist. Damit wird der Druckraum des Zylinders zur Pumpe hin abgesperrt und der zur Aufrechterhaltung des Anpressdruckes im Lamellenpaket erforderliche Druck aufrechterhalten. So kann der von der Pumpe zu erzeugende Druck abgesenkt und damit die Aufnahmeleistung der Pumpe reduziert werden. Der von der Pumpe erzeugte Druck wird auf ein notwendiges Minimum abgesenkt und nicht ganz abgeschaltet, da auch bei geschlossenen und verriegelten Schaltelementen ein Ölbedarf auf niedrigen Druckniveau im Getriebe weiter besteht, beispielsweise für Kühlung, Schmierung oder Vorbefüllung zur Vorbereitung eines Schaltvorganges.

Aus der US 6948524 B1, welche den Oberbegriff des Anpruchs 1 offenbart, ist eine Druckhaltevorrichtung eines Getriebes bekannt, welches ein Absperrventil aufweist, das den Betätigungsdruck eines Schaltelements einschließt, insbesondere nachdem die als Druckquelle wirksame Pumpe ihren Betrieb eingestellt hat und das übrige System drucklos ist. Das Absperrventil ist hierbei so ausgebildet, dass sich dieses unter der Wirkung einer Federkraft bei einem Abstellen der Pumpe, d. h. einem drucklosen Hydrauliksystem, in die Absperrstellung bewegt. Eine solche Ventilstellung wird auch als "normally closed" (entspricht "drucklos geschlossen") bezeichnet und hat den Nachteil, dass bei einem drucklosen Getriebe sämtliche zuvor geschlossenen Schaltelemente geschlossen bleiben, wodurch auch die letzte Übersetzungsstufe eingelegt bleibt.
Hierdurch wird nachteiligerweise die Funktionssicherheit des Automatikgetriebes beeinträchtigt, da es in besonderen Fällen, wie beispielsweise bei einem Motorstillstand, zum Blockieren des Automatikgetriebes kommen kann. Auch ist beispielsweise das Automatikgetriebe gegen eine Abschleppbewegung blockiert.
Die der Erfindung zugrunde liegende Aufgabe ist es, in einfacher und platzsparender Weise eine funktionssichere hydraulische Steuerungsvorrichtung für ein Automatikgetriebe zu schaffen, mittels welcher der von der Pumpe zu erzeugende erforderliche Druck, und damit die Leistungsaufnahme der Pumpe reduziert und der Verbrauch eines Fahrzeugs mit diesem Automatikgetriebe minimiert werden kann.

Diese Aufgabe wird durch die Merkmale des Patentanspruchs 1 gelöst.

Eine hydraulische Steuerungsvorrichtung für ein Automatikgetriebe umfasst mindestens ein einem Schaltelement zugeordnetes Absperrventil und mehrere, jeweils einem Schaltelement zugeordnete Druckstelleinrichtungen sowie eine dem Absperrventil zugeordnete Sperrdruckstelleinrichtung. Das Automatikgetriebe umfasst mehrere reibschlüssige Schaltelemente, wobei zur Darstellung einer Übersetzungsstufe mindestens zwei Schaltelemente zur Übertragung eines Drehmoments mittels der Beaufschlagung durch einen von einer Druckquelle wie beispielsweise einer Pumpe erzeugten und in der jeweiligen Druckstelleinrichtung eingestellten hydraulischen Betätigungsdruck geschlossen zu halten sind. Hierbei befindet sich zumindest in einem Betriebszustand des Automatikgetriebes, in welchem eine Übersetzungsstufe eingelegt ist und keine Schaltung erfolgt, das Absperrventil in einer ersten Schaltstellung, in welcher zumindest das drehmomentübertragende Schaltelement mittels des zugeordneten Absperrventils zur jeweiligen Druckstelleinrichtung hin dicht abgeschlossen ist, so dass der im Schaltelement eingeschlossene Betätigungsdruck im Wesentlichen konstant bleibt bzw. nicht absinkt, so dass ein Drehmoment übertragen werden kann, unabhängig von dem von der Pumpe erzeugten Druck.

Erfindungsgemäß ist mindestens ein Absperrventil derart ausgebildet und in dem Hydrauliksystem angeordnet, dass das Absperrventil durch die Kraft eines von der Pumpe erzeugten Sperrdrucks in der ersten Schaltstellung gehalten wird und bei Unterschreitung eines bestimmten Wertes des von der Pumpe erzeugten Drucks, und damit des Sperrdrucks, das Absperrventil selbsttätig zumindest durch die Wirkung des eingesperrten Schaltelementdrucks in eine zweite Schaltstellung verschiebbar ist, in welcher das jeweilige Schaltelement mit der jeweiligen Druckstelleinrichtung verbunden ist.

In dem stationären Fahrzustand kann vorteilhafterweise der von der Pumpe erzeugte Druck, auch als Systemdruck bezeichnet, unter den Wert des zur Betätigung des Schaltelements erforderlichen Betätigungsdruck reduziert werden, da die Kupplung unabhängig vom Systemdruck durch den eingeschlossenen Betätigungsdruck, nachfolgend auch als Schaltelement- oder Kupplungsdruck bezeichnet, weiterhin geschlossen bleibt und ein Drehmoment übertragen kann. Durch das Absenken des Systemdrucks sinkt die Leistungsaufnahme der Pumpe, wodurch der Gesamtwirkungsgrad des Automatikgetriebes steigt.

Der Vorteil der erfindungsgemäßen hydraulischen Steuerungsvorrichtung ist, dass bei Stillstand der Pumpe die Schaltelemente öffnen und somit kein Blockieren des Getriebes möglich ist, so dass eine hohe Funktionssicherheit gegeben ist.

Vorteilhafte Ausgestaltungen der Erfindung ergeben sich aus den Unteransprüchen.

In einer vorteilhaften Ausgestaltung der hydraulischen Steuerungsvorrichtung ist das Absperrventil als schaltbares Sitzventil ausgebildet, welches einen Sitzkolben umfasst, der axial verschiebbar in einer in einem Gehäuse ausgebildeten Ventilbohrung geführt ist. Hierbei weist der Sitzkolben an einem Ende eine erste von dem Sperrdruck in axialer Projektion beaufschlagbare Wirkfläche und an einem zweiten Ende mindestens eine von einem weiteren Druck in entgegengesetzte Verschieberichtung in axialer Projektion beaufschlagbare weitere Wirkfläche auf. Durch die Ausgestaltung als Sitzventil ist im Vergleich zu einem Schieberventil ein dichtes Abschließen des Betätigungsdrucks im Schaltelement möglich, so dass der Betätigungsdruck nicht absinken kann.

In einer vorteilhaften Variante hiervon ist die Ventilbohrung als Stufenbohrung ausgebildet, welche mehrere Bohrungsabschnitte unterschiedlichen Durchmessern aufweist.

Eine bevorzugte Variante ist derart ausgebildet, dass das Absperrventil vier Anschlüsse aufweist, von welchen drei Anschlüsse mit Druckstelleinrichtungen zu deren Druckbeaufschlagung oder Entlüftung verbunden sind und ein Anschluss mit einem drucklosen Bereich verbunden ist. Durch die geringe Anzahl druckbeaufschlagter Anschlüsse wird eine hohe Dichtigkeit, d. h. geringe Leckageverluste sowie eine bauraumsparende Anordnung ermöglicht.

In diesem Zusammenhang ist in einer vorteilhaften Ausgestaltung vorgesehen, dass die Ventilbohrung des Absperrventils in radialer Richtung von vier Druckräumen durchdrungen ist, wobei im ersten Druckraum der Sperrdruck auf die erste Wirkfläche wirksam ist, der zweite Druckraum entlüftet ist, der dritte Druckraum direkt mit dem Schaltelement verbunden ist und der vierte Druckraum von einem Kupplungsventildruck beaufschlagbar ist. Hierbei ist am Gehäuse zwischen dem dritten und dem vierten Druckraum ein kreis- oder ringförmiger Dichtsitz ausgebildet, an welchem der Sitzkolben in der ersten Schaltstellung anliegt, wodurch der dritte vom vierten Druckraum getrennt ist. Hierdurch ist ein Bereich der axialen Projektionsfläche an dem zweiten Ende des Sitzkolbens radial außerhalb des Dichtsitzes im dritten Druckraum von dem Kupplungsdruck beaufschlagbar und bildet eine zweite ringförmige Wirkfläche. Ein anderer Bereich der axialen Projektionsfläche am zweiten Ende des Sitzkolbens innerhalb des von dem Dichtsitz beschriebenen Kreises ist im vierten Druckraum von dem Kupplungsventildruck beaufschlagbar und bildet eine dritte Wirkfläche. In der zweiten Schaltstellung des Absperrventils sind der dritte und der vierte Druckraum miteinander verbunden und damit entspricht der Kupplungsdruck dem Kupplungsventildruck, welcher auf die zweite und dritte Wirkfläche am zweiten Ende des Sitzkolbens wirksam ist.

Hierdurch erhält man vorteilhafterweise abhängig von der Schaltstellung des Sitzkolbens unterschiedliche Ventilübersetzungen, d. h. unterschiedliche Verhältnisse der Wirkflächen zueinander, welche zudem von unterschiedlichen Drücken beaufschlagt werden.

Es ist vorteilhaft, dass der Sitzkolben mehrere zylindrische Kolbenabschnitte aufweist, wobei am ersten Ende des Sitzkolbens an einem ersten Kolbenabschnitt eine kreisquerschnittsförmige Stirnfläche ausgebildet ist, wobei der erste Kolbenabschnitt den Zylinder mit dem größten Durchmesser aufweist, und am zweiten Ende mindestens ein Zylinder kleineren Durchmessers ausgebildet ist, wobei der Kolbenabschnitt mit dem kleinsten Durchmesser am zweiten Ende des Sitzkolbens ausgebildet ist, und wobei der Übergang von zweiten zum dritten Kolbenabschnitt eine Ringfläche bildet, welche mit dem Gehäuse zwischen dem dritten und vierten Druckraum einen ringförmigen Dichtsitz bildet.

In einer Variante ist es möglich, dass der Sitzkolben einstückig ausgebildet ist.

Bei einer alternativen Variante ist der Sitzkolben mehrstückig ausgebildet, wobei die verschiedenen Teile in unterschiedlichen Bohrungsabschnitten der Ventilbohrung geführt sind, so dass Abweichungen in der Konzentrizität der unterschiedlichen Bohrungsabschnitte nicht zu einem Verklemmen des Sitzkolbens führen können.

Eine vorteilhafte Ausgestaltung hiervon zeigt, dass der ringförmige Dichtsitz als Flachsitz mit einer Elastomerdichtung ausgeführt ist, wobei die Elastomerdichtung am Gehäuse und/oder am Sitzkolben angeordnet ist. Hierdurch wird eine hohe Dichtigkeit erreicht und aufgrund des flachen Sitzes die Flächenpressung zwischen Sitzkolben und Gehäusematerial gering gehalten.

In einer vorteilhaften Alternative ist die hydraulische Steuerungsvorrichtung so ausgestaltet, dass der Sitzkolben mehrere Kolbenabschnitte aufweist, wobei am ersten Ende des Sitzkolbens an einem ersten zylindrischen Kolbenabschnitt eine kreisquerschnittsförmige Stirnfläche ausgebildet ist, wobei der erste Kolbenabschnitt den Zylinder mit dem größten Durchmesser aufweist, und dass der Sitzkolben zu seinem zweiten Ende hin einen zweiten zylindrischen Kolbenabschnitt mit einem kleineren Durchmesser aufweist und an den zweiten Kolbenabschnitt anschließend einen dritten Kolbenabschnitt aufweist, welcher kegel- oder kegelstumpfförmig oder sphärisch sich zum zweiten Ende verjüngend ausgebildet ist.

In einer weiteren Ausgestaltung ist vorgesehen, dass zwischen dem entlüfteten zweiten und dem dritten Druckraum an einer Innenkontur des Gehäuses und/oder an einer zylindrischen Außenkontur des Sitzkolbens ein Dichtelement angebracht ist, um Leckagen von dem Schaltelement zu dem entlüfteten zweiten Druckraum zu verhindern. Hiermit kann vorteilhafterweise der Schaltelementdruck zuverlässig auf einem konstanten hohen Wert gehalten werden.

In einer vorteilhaften Ausgestaltung ist das Verhältnis der drei Wirkflächen zueinander so gewählt, dass ein Sperrdruck, welcher geringer ist als der Kupplungsdruck, ausreichend ist, um das Absperrventil entgegen der Summe der Kräfte aus dem für die Übertragung des maximalen Drehmoments ausreichenden Kupplungsdruck und dem Kupplungsventildruck in der ersten Schaltstellung zu halten. Hierdurch bestimmt das Verhältnis der Wirkflächen, wie weit der Systemdruck außerhalb der Schaltungen abgesenkt werden, da das Absperrventil geschlossen zu halten ist.

In diesem Zusammenhang ist vorgesehen, dass der ausreichende Wert des Sperrdrucks maximal 3 bar beträgt.

In einer vorteilhaften Alternative ist zwischen dem zweiten Ende des Sitzkolbens und dem benachbarten Ende der Ventilbohrung eine Druckfeder angeordnet, die zusätzlich zu dem Kupplungsventildruck auf den Sitzkolben eine Kraft in Richtung der zweiten Schaltstellung ausübend ist. Mittels der Feder ist es möglich, dass sich bei drucklosem Getriebe bzw. Hydrauliksystem das Absperrventil immer sicher in der zweiten Schaltstellung befindet.

In diesem Zusammenhang ist es möglich, dass beim Stillstand der Pumpe oder bei Unterschreitung eines bestimmten Wertes des von der Pumpe erzeugten Drucks, oder bei drucklosem Automatikgetriebe, das Absperrventil selbsttätig durch die Wirkung des eingesperrten Schaltelementdrucks und/oder die Wirkung der Kraft der Druckfeder in die zweite Schaltstellung verschiebbar ist, in welcher das jeweilige Schaltelement mit dem restlichen Hydrauliksystem, und damit der drucklosen Pumpe, verbunden und das Schaltelement sicher geöffnet ist.

In dieser alternativen Ausgestaltung ist das Verhältnis der drei Wirkflächen zueinander so gewählt, dass ein Sperrdruck welcher maximal dem außerhalb der Schaltungen abgesenkten Systemdruck entspricht, ausreichend ist, um das Absperrventil entgegen der Summe der Kräfte aus dem für die Übertragung des maximalen Drehmoments ausreichenden Kupplungsdruck, dem Kupplungsventildruck und der Kraft der Druckfeder in der ersten Schaltstellung zu halten.

Eine vorteilhafte Ausgestaltung zeigt, dass ein Absperrventil jeweils nur einem Schaltelement zugeordnet ist, und wobei die hydraulische Steuerungsvorrichtung eine Sperrdruckstelleinrichtung aufweist, durch welche alle Absperrventile mit einem gleichen Sperrdruck beaufschlagt werden.

In einer alternativen Ausgestaltung der Erfindung ist eine erste Sperrdruckstelleinrichtung für die Betätigung der Absperrventile eines Teils der Schaltelemente des Automatikgetriebes und eine weitere Sperrdruckstelleinrichtung für die Betätigung der Absperrventile eines weiteren Teils der Schaltelement des Automatikgetriebes vorgesehen. Hierdurch sind für die jeweiligen Gruppen von Schaltelementen bzw. derer Absperrventile voneinander unabhängige, unterschiedliche Sperrdrücke einstellbar.

Bei einer weiteren möglichen Ausbildung der Erfindung ist mindestens ein weiteres Absperrventil derart ausgebildet und in dem Hydrauliksystem angeordnet ist, dass dieses durch die Kraft eines von der Pumpe erzeugten Sperrdrucks in der zweiten Schaltstellung gehalten wird und beim Stillstand der Pumpe bzw. bei Unterschreitung eines bestimmten Wertes des Sperrdrucks das Absperrventil selbsttätig, beispielsweise mittels einer Druckfeder, in die erste Schaltstellung verschiebbar ist, in welcher das jeweilige Schaltelement zur jeweiligen Druckstelleinrichtung hin dicht verschlossen ist.

In diesem Zusammenhang ist vorgesehen, dass ein Automatikgetriebe eine hydraulische Steuerungsvorrichtung nach einem der vorangegangenen Ansprüche aufweist.

Hierbei ist es möglich, dass in dem Automatikgetriebe mindestens zwei Schaltelemente so ausgebildet sind, dass diese geöffnet sind, wenn der Betätigungsdruck einen bestimmten Wert unterschreitet.

In einer weiteren Ausgestaltung der Erfindung ist es vorgesehen, dass ein Teil der Schaltelemente unter einem Betätigungsdruck geschlossen sind um ein Drehmoment übertragen zu können, und ein anderer Teil der Schaltelemente geschlossen ist, wenn deren Druckstelleinrichtungen drucklos sind. Das Schließen dieser Schaltelemente kann dann beispielsweise unter der Wirkung einer Druckfeder oder elektromechanisch erfolgen.

In einem Verfahren zur Steuerung dieses Automatikgetriebes wird ausgehend von einem Betriebszustand, in welchem ein Schaltelement unter dem Kupplungsdruck geschlossen ist, vor einer beabsichtigten Erhöhung des Kupplungsventildrucks der Sperrdruck derart angehoben, dass das Absperrventil erst in die zweite Schaltstellung bewegt wird, wenn der Kupplungsventildruck größer oder gleich dem eingesperrten Kupplungsdruck ist. Zudem wird ausgehend von einem Betriebszustand, in welchem das Absperrventil, und damit auch das Schaltelement, geöffnet ist und nun das Schaltelement geschlossen werden soll, das Absperrventil geschlossen, nachdem der Kupplungsventildruck soweit angehoben wurde, dass das Schaltelement geschlossen ist. Darüber hinaus wird nach dem Absenken des Kupplungsventildrucks der Sperrdruck auf einen Wert abgesenkt, der ausreichend ist um das Absperrventil entgegen dem Kupplungsdruck in der ersten Schaltstellung zu halten. Dies ermöglicht auch eine Absenkung des Systemdrucks auf den Wert des Sperrdrucks. Voraussetzung hierfür ist, dass das Absperrventil "normally closed" ausgeführt ist, d. h. unter der Wirkung des Sperrdrucks in die erste Schaltstellung schaltbar ist.

Ausführungsbeispiele des erfindungsgemäßen Verfahrens sind in den Zeichnungen dargestellt und werden im Folgenden näher beschrieben.

Es zeigen
- Fig. 1a: ein Absperrventil in einer ersten Schaltstellung;
- Fig. 1b: ein Absperrventil in einer zweiten Schaltstellung;
- Fig. 2a: eine alternative Ausgestaltung eines Sitzkolbens in einer ersten Schaltstellung;
- Fig. 2b: eine alternative Ausgestaltung eines Sitzkolbens in einer zweiten Schaltstellung;
- Fig. 3a: eine mehrteilige Ausgestaltung eines Sitzkolbens in einer ersten Schaltstellung;
- Fig. 3b: eine mehrteilige Ausgestaltung eines Sitzkolbens in einer zweiten Schaltstellung;
- Fig. 4: eine hydraulische Steuerungsvorrichtung eines Automatikgetriebes und
- Fig. 5: ein Diagramm mit den zeitlichen Verläufen von Sperrdruck, Kupplungsdruck und Kupplungsventildruck zweier Schaltelemente während eines Schaltvorganges und einer Kupplungsdruckänderung.

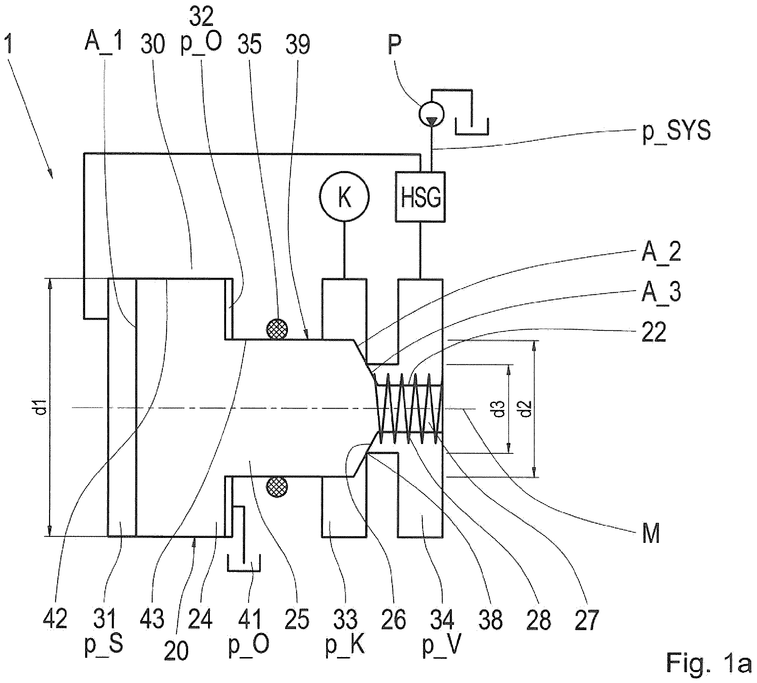

Fig. 1a zeigt die schematische Darstellung eines erfindungsgemäßen Absperrventils 1 in einer ersten Schaltstellung. Das Absperrventil 1 ist als schaltbares Sitzventil ausgeführt.

Das Absperrventil 1 umfasst einen rotationssymmetrischen Sitzkolben 20 mit einer Mittelachse M welcher an einem ersten Ende einen ersten zylindrischen Kolbenabschnitt 24 und einen daran benachbarten Kolbenabschnitt 25 aufweist, wobei der Kolbenabschnitt 25 einen Durchmesser d_2 aufweist, welcher kleiner ist als ein Durchmesser d_1 des Kolbenabschnitts 24. An einem zweiten Ende des Sitzkolbens 20 ist dieser in einem Kolbenabschnitt 26 kegelstumpfförmig zum zweiten Ende 22 hin zulaufend ausgebildet, wobei sich ein dritter zylindrischer Kolbenabschnitt an den Kegelstumpf anschließt, welcher als Federführungsbolzen 27 ausgebildet ist.

Der Sitzkolben 20 ist axial, d. h. entlang der Mittelachse M, in einer Ventilbohrung 39 geführt, welche entsprechend dem Sitzkolben 20 mit unterschiedlichen Durchmessern in einem Gehäuse 30 ausgebildet ist. So weist die Ventilbohrung 39 einen Bohrungsabschnitt 42 und einen Bohrungsabschnitt 43 auf. Im Bohrungsabschnitt 42 ist der Kolbenabschnitt 24 und im Bohrungsabschnitt 43 der Kolbenabschnitt 25 axial verschiebbar geführt. Das Gehäuse 30 muss hierbei kein separates Ventilgehäuse sein, sondern kann ein Teil des Getriebegehäuses oder des Gehäuses eines hydraulischen Schaltgeräts HSG sein.

In dem Gehäuse 30 sind innerhalb der Ventilbohrung 39 und um diese herum vier Druckräume 31, 32, 33 und 34 ausgebildet, welche die Ventilbohrung 39 zum Teil in radialer Richtung, d. h. orthogonal zur Mittelachse M, durchdringen. Der erste Druckraum 31 an einem ersten Ende der Ventilbohrung 39 ist hydraulisch mit einer von einer Pumpe P als Druckquelle versorgten Druckstelleinrichtung verbunden, welche beispielsweise in dem hydraulischen Schaltgerät HSG angeordnet ist. In dem hydraulischen Schaltgerät HSG werden mittels verschiedener Druckstelleinrichtungen verschiedene Drücke in verschiedenen Druckräumen eingestellt, bzw. geregelt, wie beispielsweise ein Sperrdruck p_S, ein Kupplungsdruck p_K und ein Kupplungsventildruck p_V. Ein von der Pumpe P zu erzeugender Systemdruck p_SYS ist der höchste Druck der hydraulischen Steuerungsvorrichtung im Getriebe und wird ebenfalls im hydraulischen Schaltgerät HSG eingestellt. Das hydraulische Schaltgerät HSG muss keine geschlossene Einheit sein, sondern kann auch aus unterschiedlich angeordneten Komponenten bestehen. Ein in dem Druckraum 31 herrschender Sperrdruck p_S wird unabhängig vom Systemdruck p_SYS eingestellt, d. h. der Sperrdruck p_S kann zwar maximal die Höhe des Systemdrucks p_SYS annehmen, ist aber separat mittels einer Druckstelleinrichtung des hydraulischen Schaltgeräts HSG einstellbar. In dem Druckraum 31 wird der Kolbenabschnitt 24 des Sitzkolbens 20 auf einer Wirkfläche A_1von dem Sperrdruck p_S beaufschlagt. Die kreisförmige Wirkfläche A_1 errechnet sich aus dem Durchmesser d_1. Der Druckraum 32, der als nächster dem Druckraum 31 benachbart ist, ist entlüftet. Unter einem entlüfteten Druckraum ist zu verstehen, dass dieser direkt, d. h. ohne dazwischen angeordnete Ventile oder Absperreinrichtungen, mit einem Bereich 41 des Getriebes verbunden ist, in welchem ein Umgebungsdruck p_0 herrscht. Ein solcher Bereich wird nachfolgend neben "entlüftet" auch als "drucklos" bezeichnet.

Der Druckraum 33 ist direkt mit einem Schaltelement K verbunden, in welchem der Kupplungsdruck p_K herrscht. Der Druckraum 34 ist mit einem Bereich des hydraulischen Schaltgeräts HSG verbunden, in welchem der Kupplungsventildruck p_V eingestellt wird. Dieser kann wie der Sperrdruck p_S ebenfalls maximal die Höhe des Systemdrucks p_SYS annehmen, ist aber separat mittels des hydraulischen Schaltgeräts HSG einstellbar. Zwischen dem Druckraum 33 und dem Druckraum 34 weist die Ventilbohrung 39 einen Durchmesser d_3 auf.

In der dargestellten Schaltstellung des Absperrventils 1, bzw. des Sitzkolbens 20, liegt der Sitzkolben 20 mit dessen kegelsitzförmigem Kolbenabschnitt 26 über dessen Umfang an einem im Gehäuse 30 ausgebildeten Ventilsitz 38 an, welcher von einer Wand des Druckraums 33, die dem Druckraum 34 zugewandt ist, und der diese durchdringenden Ventilbohrung 39 gebildet wird. In dieser Schaltstellung dichtet der Sitzkolben 20 die Druckräume 33 und 34 gegeneinander ab, so dass das Schaltelement K nicht vom Kupplungsventildruck p_V beaufschlagt werden kann, bzw. ein im Schaltelement K und damit dem Druckraum 33 eingeschlossener Kupplungsdruck p_K nicht entweichen und damit absinken kann.

Der Dichtsitz 38 weist entsprechend der Ventilbohrung 39 in diesem Abschnitt den Durchmesser d_3 auf. In axialer Projektion ist der Sitzkolben 20 an seinem zweiten Ende 22 auf einer Wirkfläche A_3 von dem Kupplungsventildruck p_V im Druckraum 34 beaufschlagbar, wobei sich die Wirkfläche A_3 in der dargestellten Schaltstellung als Kreisfläche aus dem Durchmesser d_3 errechnet. Im Druckraum 33 ist in axialer Projektion eine ringförmige Wirkfläche A_2 von dem Kupplungsdruck p_K beaufschlagbar, wobei sich die Wirkfläche A_2 als Differenz zwischen den Kreisflächen aus den Durchmessern d_2 und d_3 errechnet. Die Wirkfläche A_2 befindet sich somit radial außerhalb und die Wirkfläche A_3 innerhalb des Dichtsitzes 38. Eine gesamte axiale Projektionsfläche A_4 des Kolbenabschnitts 26 errechnet sich zur Kreisfläche A_2 + A_3 aus dem Durchmesser d_2.

Zwischen dem mit dem Schaltelement K verbundenen Druckraum 33 und dem entlüfteten Druckraum 32 ist in an einer Innenkontur der Ventilbohrung 39 oder an einer Außenkontur des Kolbenabschnitts 25 ein Dichtelement 35 angeordnet, um eine Leckage aus dem Druckraum 33 zu verhindern, so dass der eingeschlossene Kupplungsdruck p_K nicht absinken kann.

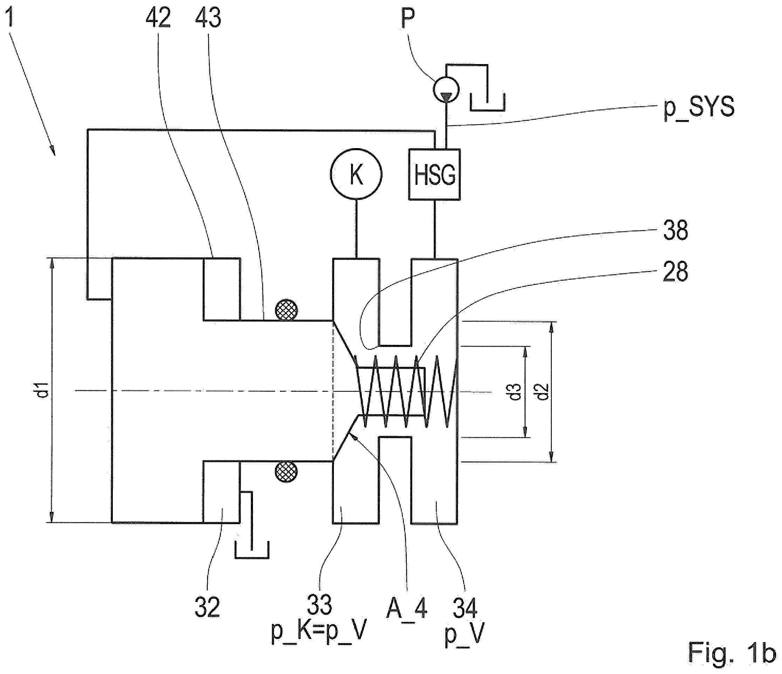

In der gezeigten Ausführung des Absperrventils 1 ist um den Federführungsbolzen 27 eine Druckfeder 28 angeordnet, welche auf den Sitzkolben 20 in jeder Position eine Kraft ausübt, die diesen in eine in Fig.1b gezeigte zweite Schaltstellung verschieben will. Die Feder 28 ist zur Erfüllung der Funktion des Absperrventils 1 nicht zwingend erforderlich, sondern optional einsetzbar. Allerdings nimmt der Sitzkolben insbesondere bei stehendem bzw. drucklosem Automatikgetriebe der Sitzkolben unter der Federkraft immer eindeutig die zweite Schaltstellung ein, in welcher das Schaltelement K geöffnet ist. Dies wird auch als "normally opened" bezeichnet.

Die dargestellte erste Schaltstellung, wird dann eingenommen, wenn eine auf den Sitzkolben 20 wirkende Sperrkraft, welche sich als Produkt aus dem Sperrdruck p_S und einer Wirkfläche A_1 errechnet, größer ist, als die entgegen gerichtete Summe der Kräfte aus Kupplungsdruck p_K, Kupplungsventildruck p_V und der Druckfeder 28. Die Kraft aus dem Kupplungsdruck p_K errechnet sich als Produkt aus Kupplungsdruck p_K und Wirkfläche A_2 und die Kraft aus dem Kupplungsventildruck p_V als Produkt aus Kupplungsventildruck p_V und Wirkfläche A_3.

Der Zweck des Absperrventils 1 ist wie eingangs erwähnt, das Schaltelement K dicht gegen die Pumpe P abzusperren, so dass der von der Pumpe zu erzeugende Systemdruck p_SYS gegenüber dem Kupplungsdruck p_K abgesenkt werden kann, ohne dass das Schaltelement K öffnet. Die Größenverhältnisse der Wirkflächen A_1, A_2 und A_3 zueinander sind so gewählt, dass ein relativ geringer, von der Pumpe zu erzeugender Sperrdruck p_S ausreicht, um den Sitzkolben 20 entgegen den Kräften aus Kupplungsdruck p_K, Kupplungsventildruck p_V und - falls vorhanden - der Kraft der Feder 28 in der ersten Schaltstellung zu halten und den Kupplungsdruck p_K einzuschließen. Der letztendlich von der Pumpe P erzeugte Kupplungsventildruck p_V ist auf ein Vorbefülldruckniveau abgesenkt.

Um einen Übersetzungswechsel, auch als Gangschaltung bezeichnet, vornehmen zu können, muss mindestens ein Schaltelement geöffnet und mindestens ein anderes Schaltelement durch eine Beaufschlagung durch den Kupplungsventildruck p_V geschlossen werden. Hierzu ist der Sitzkolben 20 in die zweite Schaltstellung zu bewegen, welche in Fig.1b in schematischer Darstellung gezeigt ist. Der Sitzkolben 20 hat sich von dem Dichtsitz 38 abgehoben, so dass die Druckräume 33 und 34 miteinander verbunden sind und das Schaltelement K von der Pumpe P mit dem Druckmedium befüllt werden kann. Der Kupplungsdruck p_K entspricht somit in der zweiten Schaltstellung dem Kupplungsventildruck p_V, welcher im HSG eingestellt wird und axial auf die gesamte Projektionsfläche A_4 wirkt, welche sich aus dem Durchmesser d_2 errechnet, bzw. sich als Summe der Wirkflächen A_2 und A_3 ergibt. Der Sperrdruck p_S wurde im HSG so weit reduziert, dass die Kraft des auf die Fläche A_4 wirkenden Kupplungsventildrucks p_V, gegebenenfalls zuzüglich der Kraft der Feder 28 falls vorhanden, den Sitzkolben 20 in der zweiten Schaltstellung halten kann.

Als alternative Ausgestaltung kann zur Reduktion radialer Zwangskräfte durch einen Bohrungsversatz in der Ventilbohrung der Sitzkolben auch zweiteilig ausgeführt werden. Dieser umfasst dann einen Sperrkolben, welcher vom Sperrdruck beaufschlagbar ist und einen Dichtkolben, welcher das Schaltelement gegen die Pumpe dicht absperrt. Die Trennebene der beiden Bauteile ist der entlüftete Druckraum.

Die Praxis zeigt, dass schwergängige Ventil eher in offener Stellung zum Klemmen neigen. Ist der Sitzkolben aufgrund von Fertigungstoleranzen oder Verschmutzungen schwergängig in der Ventilbohrung, so kann der Sperrdruck p_S auf den Wert des Kupplungsventildrucks p_V eingestellt werden und aufgrund der Flächenverhältnisse der Wirkflächen der Sitzkolben 20 gegen den Kupplungszuführdruck p_V und den Kupplungsdruck p_K in die erste Schaltstellung verschoben werden.

Fig. 1b zeigt eine schematische Darstellung eines erfindungsgemäßen Absperrventils 1 in einer zweiten Schaltstellung. Der Sitzkolben 20 befindet sich hierbei mit seinem ersten Ende an einem Anschlag im Druckraum 31. Die Druckräume 33 und 34 sind miteinander verbunden, so dass der Kupplungsdruck p_K gleich dem Kupplungsventildruck p_V ist, welcher sowohl auf die axiale Projektionsfläche A_4 am zweiten Ende des Sitzkolbens 20 als auch auf das Schaltelement K wirkt. Die Projektionsfläche A_4 errechnet sich als Kreisfläche aus dem Durchmesser d_2, als Summe der Wirkflächen A_2 und A_3. Die Druckfeder 28 ist auch in der zweiten Schaltstellung vorgespannt, so dass diese eine Kraft auf den Sitzkolben 20 in Richtung der zweiten Schaltstellung ausübt.

Bei einem Ausfall oder einem Abstellen des Antriebsmotors des Kraftfahrzeugs und dem damit verbundenen Stillstand der Pumpe P kommt die Druckölversorgung des Getriebes zum Erliegen und alle im HSG eingestellten Drücke bauen sich ab, so dass bei in der ersten Schaltstellung des Absperrventils sowohl der Druckraum 31 bzw. der Sperrdruck p_S als auch der Druckraum 34 bzw. der Kupplungsventildruck p_V drucklos sind. Der Druckraum 33, und damit die Wirkfläche A_2 hingegen sind von dem Kupplungsdruck p_K beaufschlagt. Hierdurch wird der Sitzkolben nach Abstellen der Pumpe P in dessen erster Schaltstellung von den eingeschlossenen Kupplungsdrücken p_K, bzw. zusätzlich durch die Kraft der optional vorhandenen Feder in die zweite Schaltstellung verschoben. Das Schaltelement ist nun hydraulisch mit dem drucklosen Bereich der hydraulischen Steuerungsvorrichtung bzw. der Pumpe P verbunden, so dass kein Schaltelement, dem ein erfindungsgemäßes Absperrventil zugeordnet ist mehr geschlossen ist. Damit ist ein Blockieren des Automatikgetriebes ausgeschlossen. Hierbei kann aus Gründen der Funktionssicherheit redundant eine weitere Entlüftungsmöglichkeit vorgesehen werden, falls das Absperrventil nicht in die zweite Schaltstellung bewegbar ist.

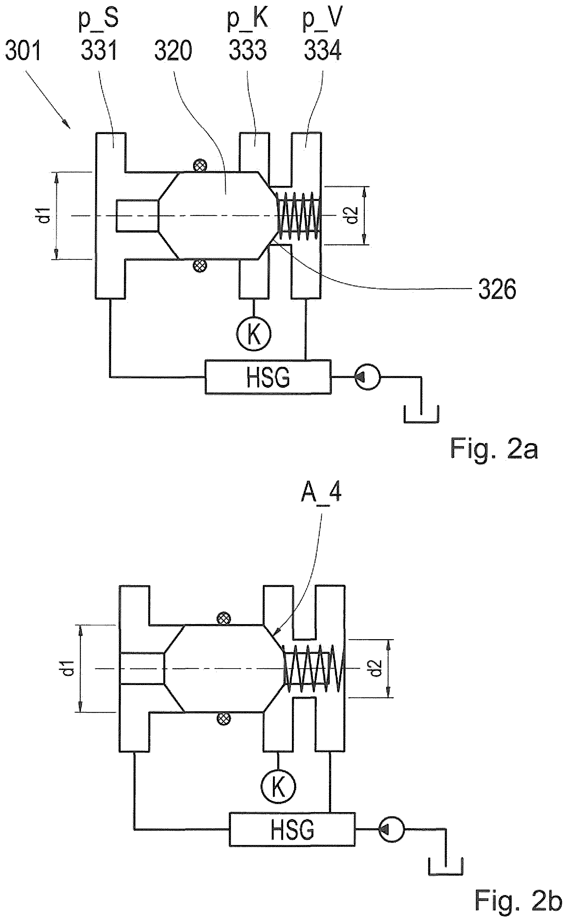

Fig. 2a zeigt ein Absperrventil 301 mit einem alternativ ausgestalteten Sitzkolben 320 in einer ersten Schaltstellung, in welcher ein Kupplungsdruckraum 333 mittels des Sitzkolbens 320 von einem Kupplungsventildruckraum 334 getrennt ist. Der Sitzkolben 320 ist hierbei nicht als Stufenkolben mit zwei unterschiedlichen Außendurchmessern wie in Fig.1a und 1b ausgeführt, sondern weist als größten Außendurchmesser einen Außendurchmesser d_32 auf, so dass auf der Seite eines Sperrdruckraums 331 eine gleich große axiale Projektionsfläche als Wirkfläche mit dem Sperrdruck p_S beaufschlagbar ist wie die gesamte axiale Projektionsfläche auf der Seite eines Kupplungsdruckraumes 333 und eines Kupplungsventildruckraumes 334, welche in der in Fig.2b gezeigten zweiten Schaltstellung des Absperrventils 320 von einem Kupplungsventildruck p_V beaufschlagbar ist. Auf der Seite des Sperrdruckraums 331 ist am Sitzkolben ein Anschlagbolzen 324 ausgebildet, so dass der gesamte Sitzkoben 320 symmetrisch ausgebildet ist. Der kupplungsdruckraumseitige Teil des Sitzkolbens 320 sowie Durchmesser und Lage eines Dichtsitzes 338 sind gleich wie in dem in Fig.1a und 1b gezeigten Absperrventil. Hierdurch kann ein entlüfteter Ausgleichsdruckraum wie der Druckraum 32 in Fig. 1a und 1b entfallen, so dass die Baulänge des Absperrventils 320 und der von diesem erforderte Bauraum geringer ist als bei dem Absperrventil 20 in Fig.1a und 1b.

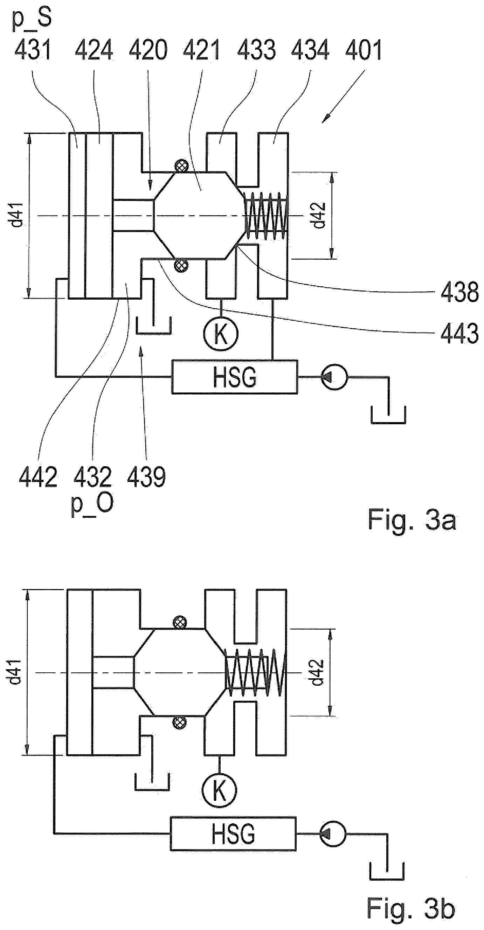

Fig. 3a zeigt einen geteilten bzw. mehrteiligen Sitzkolben 420 in einer ersten Schaltstellung eines Absperrventils 401, in welcher ein Kupplungsdruckraum 433 mittels des Sitzkolbens 420 gegen einen Kupplungsventildruckraum 434 abgeschlossen ist. Der Sitzkolben 420 umfasst einen Absperrkolben 421 und einen Betätigungskolben 424, wobei der Betätigungskolben 424 einen Außendurchmesser d_41 aufweist, der größer ist als ein Außendurchmesser d_42 des Absperrkolbens 421. Prinzipiell entspricht der Sitzkolben 420 dem Sitzkolben 20 aus Fig.1a und 1b, wobei der Kolbenabschnitt 24 von dem Rest des Sitzkolbens 20 getrennt wurde. Wenn ausgehend von einer in Fig.3b gezeigten zweiten Schaltstellung des Sitzkolbens 420 der Sperrdruck p_S bei Betätigung des Absperrventils 401 in einem Sperrdruckraum 431 auf den Betätigungskolben 424 wirkt, wird dieser in einem Bohrungsabschnitt 442 einer Ventilbohrung 439 verschoben und gegen den Absperrkolben 421 gedrückt. Hierdurch wird dieser in einem Bohrungsabschnitt 443 gegen einen Dichtsitz 438 gedrückt und damit in die erste Schaltstellung bewegt. Ein auf der anderen Seite des Betätigungskolbens 424 innerhalb des Bohrungsabschnitts 442 ausgebildeter Ausgleichsdruckraum 432 ist entlüftet, d. h. in diesem herrscht ein Umgebungsdruck p_0. Die zweiteilige Ausgestaltung des Sitzkolbens 420 bietet den Vorteil, dass bei einem toleranzbedingten Achsversatz der Mittelachsen der Bohrungsabschnitte 442 und 443 aufgrund der Entkoppelung des Betätigungskolbens 424 von dem Absperrkolben 421 diese sich entsprechend des Achsversatzes gegeneinander verschieben können und so ein Klemmen des Sitzkolbens 420 innerhalb der Ventilbohrung 439 vermieden wird.

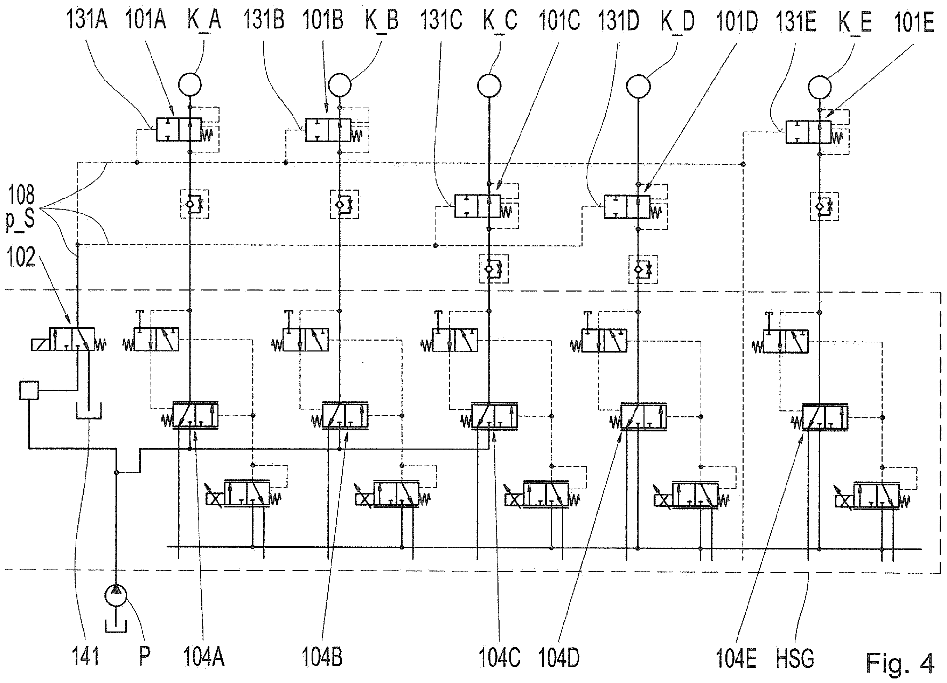

Fig.4 zeigt in einem Hydraulikschema eine hydraulische Steuerungsvorrichtung eines Automatikgetriebes, in welchem ein erfindungsgemäßes Absperrventil eingesetzt wird. Das Hydrauliksystem weist fünf Schaltelemente K_A, K_B, K_C, K_D und K_E auf. Jedem der Schaltelemente, worunter auch ein reibschlüssiges Anfahrelement, jedoch nicht ein formschlüssiges Schaltelement sein kann, ist entsprechend dem Index ein Absperrventil 101A, 101B, 101C, 101D und 101E zugeordnet. Alle Absperrventile werden kollektiv durch jeweils einen Sperrdruckanschluss 131A, 131B, 131C, 1310 und 131E von einem Sperrdruck p_S beaufschlagt. Der Sperrdruckanschluss 131A bis E entspricht hierbei dem Druckraum 31 in Fig.1a und 1b. Der Sperrdruck p_S wird in einem hydraulischen Schaltgerät HSG, welches wie das gesamte Hydrauliksystem von einer Pumpe P mit Drucköl versorgt wird, von einer Sperrdruckstelleinrichtung 105 in seiner Höhe eingestellt. Das hydraulische Schaltgerät HSG umfasst zudem für jedes Schaltelement K_A, K_B, K_C, K_D und K_E zur Einstellung des jeweiligen Kupplungsdrucks p_K als Druckstelleinrichtung ein Kupplungsventil 104A, 104B, 104C, 104D und 104E, wobei jedes dem Schaltelement mit dem gleichen Index zugeordnet ist.

Zwischen diesem Teil des hydraulischen Schaltgeräts HSG und den Absperrventilen 101A, 101B, 101C, 101D und 101E ist ein als Wegeventil ausgebildetes Sperrdruckventil 102 angeordnet, welches in diesem Beispiel elektromagnetisch in zwei Schaltstellungen schaltbar ist. In einer ersten Schaltstellung wird ein Sperrdruckkanal 108, an den alle Absperrventile 101A, 101B, 101C, 101D und 101E parallel angeschlossen sind, mit einer entsprechenden Druckstelleinrichtung des hydraulischen Schaltgeräts HSG verbunden. In einer in Fig.4 dargestellten zweiten Schaltstellung ist der Sperrdruckkanal 108 entlüftet bzw. mit einem drucklosen Bereich 141 verbunden und damit die Sperrdruckanschlüsse 131A, 131B, 131C, 131D und 131E drucklos. Hierdurch werden die Absperrventile 101A, 101B, 101C, 101D und 101E geöffnet und die Schaltelemente K_A, K_B, K_C, K_D und K_E drucklos. Nicht dargestellt ist eine redundante Entlüftungsmöglichkeit zur sicheren Entlüftung der Sperrdruckanschlüsse im Falle eines Motorstopps bzw. dem Abschalten der Pumpe P, um die Funktion "normally opened" zu gewährleisten.

Alternativ zur Ausführung des Druckhalteventils 102 als Schaltventil wäre auch eine Ausgestaltung als Druckregelventil denkbar, welches als Druckstelleinrichtung wirksam ist und die Höhe des Sperrdrucks p_S einstellt. Hierdurch wäre vorteilhafterweise keine zusätzliche Druckstelleinrichtung zur Einstellung des Sperrdrucks p_S erforderlich.

Durch die unter Fig.4 beschriebene Anordnung der Absperrventile 101A, 101B, 101C, 101D und 101E werden alle Schaltelemente K_A, K_B, K_C, K_D und K_E gleichzeitig von der Pumpe P getrennt, auch solche die nicht mit einem Kupplungsdruck beaufschlagt sind bzw. die kein Drehmoment übertragen, falls diese Schaltelemente "normally opened" ausgeführt sind.

Es ist möglich, dass nur einem Teil der Schaltelemente des Automatikgetriebes Absperrventile zugeordnet sind, die drucklos offen sind, und einem anderen Teil Absperrventile, die drucklos geschlossen sind, um nach dem Abstellen des Fahrzeugmotors bei einem drauffolgenden Starten eine definierte Übersetzungsstufe eingelegt zu haben, und ohne eine Verzögerung anfahren zu können.

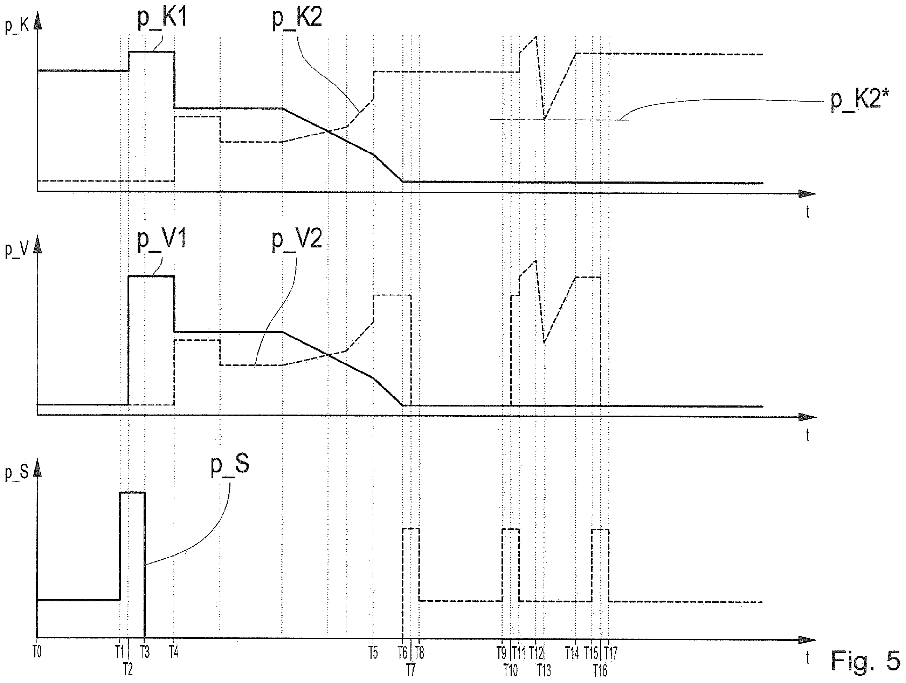

Fig.5 zeigt die zeitlichen Verläufe der Kupplungsdrücke, Kupplungsventildrücke und Sperrdrücke zweier Schaltelemente für verschiedene Änderungen der Betriebszustände.

Ausgehend von einem stationären Betriebszustand zum Zeitpunkt T0 bei geschlossenem Schaltelement wird bei einer beabsichtigten Verringerung eines Kupplungsdrucks p_K1 zwecks eines Wechsels der Übersetzungsstufe mit einem Schaltbefehl der Sperrdruck p_S zum Zeitpunkt T1 soweit angehoben, dass der Kupplungsventildruck p_V1 zum Zeitpunkt T2 über den eingeschlossenen Kupplungsdruck p_K1 erhöht werden kann. Bei einem geringeren Sperrdruck würde der Kupplungsventildruck schon bei einem geringeren Wert das Absperrventil in die zweite Schaltstellung schalten und der Kupplungsdruck würde auf den Wert des Kupplungsventildrucks fallen, wodurch sich das Schaltelement unerwünschter Weise öffnen würde. Der Sperrdruck p_S zum Zeitpunkt T1 ist hierbei so gewählt, dass der zum Zeitpunkt T2 erreichte Kupplungsventildruck ausreicht, um gemeinsam mit dem Kupplungsdruck und gegebenenfalls der Kraft einer optionalen Druckfeder das Absperrventil in die zweite Schaltstellung zu schalten, wodurch der Druckraum 34 mit dem Druckraum 33 verbunden ist und der Kupplungsdruck auf den Wert des Kupplungsventildruck angehoben wird. Die Überhöhung des Kupplungsdrucks p_K1 hat keine nachteiligen Auswirkungen auf die Momentenübertragung, da die Kupplung K1 ohnehin schon geschlossen war und das Moment schlupffrei übertragen wurde. Nachdem dieser Zustand sich mit Sicherheit einstellen konnte, wird der Druckraum 31 entlüftet und der Sperrdruck zum Zeitpunkt 3 auf Umgebungsdruck reduziert. Hierdurch ist das Absperrventil sicher in der zweiten Schaltstellung und der Druck auf das Schaltelement kann durch eine Änderung des Kupplungsventildrucks in gewünschter Weise geändert werden. Da das Schaltelement K1 im Schaltvorgang nach einer bestimmten Weg-Zeit-Funktion geöffnet werden soll und das neue zuzuschaltende Schaltelement K2 zu schließen ist, wird der Kupplungsdruck p_K1 bzw. der Kupplungsventildruck p_V1 zum Zeitpunkt T4 reduziert und im weiteren Verlauf rampenförmig auf ein Vorbefülldruckniveau reduziert.

Während des Übersetzungswechsels wird gleichzeitig zur Reduktion des Kupplungsdrucks p_K1 und damit der Herabsetzung des von der Kupplung übertragbaren Drehmoments das zuzuschaltende Schaltelement K2 mit Drucköl befüllt und durch eine Steigerung des Kupplungsventildrucks p_V2 und damit des Kupplungsdrucks p_K2 dieses in dessen Übertragungsfähigkeit angehoben. Zum Zeitpunkt T5 ist der Zielwert des Kupplungsdrucks p_K2 erreicht und das Schaltelement K2 damit geschlossen. Nachdem der Schaltvorgang nun abgeschlossen ist stellt sich ein stationärer Betriebszustand ein, in welchem das Drehmoment schlupffrei übertragen wird, so dass das Absperrventil des Schaltelements K2 in die erste Schaltstellung bewegt werden kann, um den Kupplungsdruck p_K2 im Schaltelement K2 einzusperren und vom restlichen Hydrauliksystem zu trennen. Hierfür wird zum Zeitpunkt T6 der Sperrdruck p_S soweit angehoben, dass das Absperrventil entgegen den Kräften aus Kupplungsdruck p_K2, Kupplungsventildruck p_V2 und der optionalen Druckfeder, falls vorhanden, in die erste Schaltstellung des Absperrventils geschaltet wird.

Nach dem Erreichen der ersten Schaltstellung des Absperrventils ist das Schaltelement K2 vom übrigen Hydrauliksystem getrennt und der Kupplungsdruck p_K2 eingesperrt, so dass zu dessen Aufrechterhaltung kein entsprechend hoher Kupplungsventildruck p_V2 erforderlich ist. Dieser kann somit zum Zeitpunkt T7 auf ein geringes Druckniveau, wie beispielsweise den Vorbefülldruck, abgesenkt werden. Der Sperrdruck p_S kann nach Reduktion des Kupplungsventildrucks ebenfalls abgesenkt werden, da nur noch ein geringer Kupplungsventildruck diesem entgegenwirkt und aufgrund der Verhältnisse der Wirkflächen der abgesenkte p_S ausreicht um die erste Schaltstellung des Absperrventil beizubehalten und den Kupplungsdruck p_K2 einzuschließen. Der Systemdruck p_SYS und damit der von der Pumpe P zu erzeugende Druck kann nun bis auf das Niveau des Sperrdrucks p_S abgesenkt werden. Der Sperrdruck p_S zum Halten der Kupplungsdrücke ist außerhalb Schaltung ebenfalls auf sehr niedrigem Druckniveau von ca. 0,5...2,0 bar.

Zwischen T8 und T9 befindet sich der Kupplungsventildruck p_V auf Vorbefülldruckniveau. Der Sperrdruck p_S ist größer oder gleich der Summe der auf den Sitzkolben wirkenden Kräfte aus Kupplungsdruck p_K, Kupplungsventildruck p_V und ggf. der Kraft der Feder.

Außerhalb des Schaltvorgangs wird in Fig.5 auch der zeitliche Verlauf der Drücke für ein Verfahren gezeigt, wie die hydraulische Steuervorrichtung bei einer angeforderten Änderung, bzw. Steigerung oder Verringerung des Kupplungsdrucks p_K2 betrieben wird. Ausgehend von einem ab dem Zeitpunkt T8 bestehenden stationären Zustand an der Kupplung K2 wird mit dem Auslösen der bevorstehenden Kupplungsdruckänderung der Sperrdruck p_S zum Zeitpunkt T9 auf einen Wert angehoben, der es erlaubt das Absperrventil in der ersten Schaltstellung zu halten, bis der Kupplungsventildruck p_V2 zum Zeitpunkt T10 größer oder gleich dem Kupplungsdruck p_K2 ist, und damit auch groß genug um das Absperrventil entgegen dem Sperrdruck p_S in die zweite Schaltstellung zu schalten. Die Druckräume 33 und 34 sind nun miteinander verbunden und der Kupplungsventildruck p_V2 wirkt auf die gesamte Projektionsfläche A_4, wie in Fig.1a und 1b gezeigt. Weil das Absperrventil während der Änderung des Kupplungsdrucks p_K2 durch den Kupplungsventildruck p_V2 geöffnet bleiben muss, wird der Sperrdruck p_S zum Zeitpunkt T11 so weit abgesenkt, dass die Absperrventile anderer Schaltelemente, welche druckbeaufschlagt und abgesperrt sind, geschlossen bleiben.

Nachfolgend wird der Kupplungsventildruck p_V2 weiter bis zum Zeitpunkt T12 angehoben, wie es beispielsweise erforderlich ist wenn ein höheres Drehmoment von dem Schaltelement K2 übertragen werden soll. Anschließend wird der Kupplungsventildruck p_V2 und damit der Kupplungsdruck p_K2 abgesenkt und erreicht zum Zeitpunkt T13 einen minimalen Kupplungsdruckwert p_K2*. Eine solche Absenkung ist beispielsweise erforderlich, um einen Schlupf bzw. eine Drehzahldifferenz an der Kupplung zu erzeugen. Der minimal erreichbare Kupplungsdruckwert p_K2* wird hierbei vom eingestellten Sperrdruckniveau vorgegeben. Bei einer Unterschreitung des minimalen Kupplungsdruckwerts p_K2* würde die Kraft aus dem Sperrdruck p_S auf den Sitzkolben überwiegen und diesen in die erste Schaltstellung bewegen, wodurch der Kupplungsdruck p_K2 auf dem minimalen Niveau p_K2* eingeschlossen wäre.

Nach dem Erreichen des minimalen Kupplungsdruckwerts p_K2* zum Zeitpunkt T13 wird in der Darstellung durch eine Anhebung des Kupplungsventildrucks p_V2 der Kupplungsdruck p_K2 wieder auf das Niveau angehoben, welches zum Zeitpunkt T14 erreicht ist und bei dem das Schaltelement K2 geschlossen ist und schlupffrei das Drehmoment übertragen kann. Theoretisch könnte aber auch ein schlupfbehafteter Betriebszustand stationär, d. h. über der Zeit unverändert, eingestellt werden. Um den Kupplungsdruck K2 auf dem gewünschten Niveau einzusperren, wird zum Zeitpunkt T15 der Sperrdruck p_S so weit angehoben, dass das Absperrventil entgegen Kupplungsdruck, Kupplungsventildruck und optional Federkraft geschlossen wird. Der Kupplungsdruck p_K2 ist nun im Schaltelement K2 eingeschlossen und der Kupplungsventildruck p_V2 kann zum Zeitpunkt T16 auf den Vorbefülldruck abgesenkt werden. Anschließend kann zum Zeitpunkt T17 auch der Sperrdruck p_S reduziert werden, so dass auch der von der Pumpe zu erzeugende Druck und damit deren Leistungsaufnahme reduziert wird.

Aufgrund der Flächenverhältnisse am Absperrventil ist es auch möglich, bei geschlossenem Absperrventil 1 den System-, Sperr- und Kupplungsventildruck (z.B. zu den Zeitpunkten T1 und T2) gleichzeitig anzuheben, so dass der Zeitverzug zwischen den Zeitpunkten eingespart werden kann.

Im Fehlerfall (Stromausfall) muss sicher gewährleistet werden, dass der Druckraum 31, welcher vom Sperrdruck p_S beaufschlagt ist, entlüftet wird. Hierzu wird redundant eine Entlüftungsvorrichtung im HSG vorgesehen, welche nur im hydraulischen Notlauf aktiviert wird.

Steigt in einem abgesperrten Schaltelement aufgrund thermischer Ausdehnung des eingesperrten Betriebsmediums wegen der Temperaturerhöhung im Getriebe der Kupplungsdruck p_K an, überwiegt die Kraftkomponente zum Öffnen des Dichtsitzes 38 am Absperrventil 1, was zum Entweichen des überschüssigen Kupplungsdrucks p_K führt. Sobald wieder Gleichgewicht zwischen Kupplungsdruck p_K und Sperrdruck p_S herrscht, schließt das Absperrventil 1 selbsttätig. hierdurch können Bauteilbeschädigungen durch unzulässig hohe Drücke vermieden werden.

### Bezugszeichen

- 1: Absperrventil
- 20: Sitzkolben
- 24: Kolbenabschnitt
- 25: Kolbenabschnitt
- 26: Kolbenabschnitt
- 27: Federführungsbolzen
- 28: Druckfeder
- 30: Gehäuse
- 31: Druckraum
- 32: Druckraum
- 33: Druckraum
- 34: Druckraum
- 35: Dichtelement
- 38: Dichtsitz
- 39: Ventilbohrung
- 41: Entlüftung; druckloser Bereich
- 42: Bohrungsabschnitt
- 43: Bohrungsabschnitt
- 101A: Absperrventil für Schaltelement K_A
- 101B: Absperrventil für Schaltelement K_B
- 101C: Absperrventil für Schaltelement K_C
- 101D: Absperrventil für Schaltelement K_D
- 101E: Absperrventil für Schaltelement K_E
- 102: Sperrdruckventil
- 104A: Kupplungsventil
- 104B: Kupplungsventil
- 104C: Kupplungsventil
- 104D: Kupplungsventil
- 104E: Kupplungsventil
- 105: Sperrdruckeinstellvorrichtung
- 108: Sperrdruckkanal
- 131A: Sperrdruckanschluss
- 131B: Sperrdruckanschluss
- 131C: Sperrdruckanschluss
- 131D: Sperrdruckanschluss
- 131E: Sperrdruckanschluss
- 141: druckloser Bereich
- 301: Absperrventil
- 320: Sitzkolben
- 324: Anschlagbolzen
- 325: Kolbenabschnitt
- 326: Kolbenabschnitt
- 331: Sperrdruckraum
- 333: Kupplungsdruckraum
- 334: Kupplungsventildruckraum
- 338: Dichtsitz
- 401: Absperrventil
- 420: Sitzkolben
- 421: Absperrkolben
- 424: Betätigungskolben
- 431: Sperrdruckraum
- 433: Kupplungsdruckraum
- 434: Kupplungsventildruckraum
- 432: Ausgleichsdruckraum
- 433: Kupplungsdruckraum
- 434: Kupplungsventildruckraum
- 438: Dichtsitz
- 439: Ventilbohrung
- 442: Bohrungsabschnitt
- 443: Bohrungsabschnitt
- A_1: Wirkfläche
- A_2: Wirkfläche
- A_3: Wirkfläche
- A_4: Wirkfläche
- d_1: Durchmesser
- d_2: Durchmesser
- d_3: Durchmesser
- d_32: Durchmesser
- d_41: Durchmesser
- d_42: Durchmesser
- HSG: hydraulisches Schaltgerät
- K: Schaltelement, Kupplung
- K1: Schaltelement, Kupplung
- K2: Schaltelement, Kupplung
- K_A: Schaltelement, Kupplung A
- K_B: Schaltelement, Kupplung B
- K_C: Schaltelement, Kupplung C
- K_D: Schaltelement, Kupplung D
- K_E: Schaltelement, Kupplung E
- P: Pumpe
- p_0: Umgebungsdruck
- p_K: Kupplungsdruck
- p_K1: Kupplungsdruck
- p_K2: Kupplungsdruck
- p_K2*: Kupplungsdruck
- p_S: Sperrdruck
- p_SYS: Systemdruck
- p_V: Kupplungsventildruck
- p_V1: Kupplungsventildruck Kupplung 1
- p_V2: Kupplungsventildruck Kupplung 2
- T0 bis T17: Zeitpunkt

## Patentansprüche

1. Hydraulische Steuerungsvorrichtung für ein Automatikgetriebe umfassend mehrere reibschlüssige Schaltelemente (K), die hydraulische Steuerungsvorrichtung umfassend mindestens ein einem Schaltelement zugeordnetes Absperrventil (1) und mehrere, jeweils einem Schaltelement zugeordnete Druckstelleinrichtungen sowie eine dem Absperrventil (1) zugeordnete Sperrdruckstelleinrichtung, wobei zur Darstellung einer Übersetzungsstufe mindestens zwei Schaltelemente zur Übertragung eines Drehmoments mittels der Beaufschlagung durch einen von einer Pumpe (P) erzeugten und in der Druckstelleinrichtung eingestellten hydraulischen Betätigungsdruck (p_K) geschlossen zu halten sind, wobei zumindest in einem Betriebszustand des Automatikgetriebes, in welchem eine Übersetzungsstufe eingelegt ist und keine Schaltung erfolgt, das Absperrventil (1) sich in einer ersten Schaltstellung befindet, in welcher zumindest das drehmomentübertragende Schaltelement (K) mittels des zugeordneten Absperrventils (1) zur jeweiligen Druckstelleinrichtung hin dicht abgeschlossen ist, so dass der im Schaltelement (K) eingeschlossene Betätigungsdruck (p_K) im Wesentlichen konstant bleibt bzw. nicht absinkt, **dadurch gekennzeichnet, dass** das mindestens ein Absperrventil (1) derart ausgebildet und in dem Hydrauliksystem angeordnet ist, dass dieses durch die Kraft eines von der Pumpe (P) erzeugten Sperrdrucks (p_S) in der ersten Schaltstellung gehalten wird und beim Stillstand der Pumpe (P) bzw. bei Unterschreitung eines bestimmten Wertes des von der Pumpe (P) erzeugten Drucks, und damit des Sperrdrucks (p_S), das Absperrventil (1) selbsttätig zumindest durch die Wirkung des eingesperrten Schaltelementdrucks (p_K) in eine zweite Schaltstellung verschiebbar ist, in welcher das jeweilige Schaltelement (K) mit der jeweiligen Druckstelleinrichtung verbunden ist.

2. Hydraulische Steuerungsvorrichtung nach Anspruch 1, **dadurch gekennzeichnet, dass** das Absperrventil (1) als schaltbares Sitzventil ausgebildet ist, welches einen Sitzkolben (20) umfasst, der axial verschiebbar in einer i n einem Gehäuse (30) ausgebildeten Ventilbohrung (39) geführt ist, wobei der Sitzkolben (20) an einem Ende eine erste von dem Sperrdruck in axialer Projektion beaufschlagbare Wirkfläche (A_1) und an einem zweiten Ende mindestens eine von einem weiteren Druck in entgegengesetzte Verschieberichtung in axialer Projektion beaufschlagbare weitere Wirkfläche (A_2, A_3) aufweist.

3. Hydraulische Steuerungsvorrichtung nach Anspruch 2, **dadurch gekennzeichnet, dass** das Absperrventil vier Anschlüsse (31, 32, 33, 34) aufweist, von welchen drei Anschlüsse (31, 33, 34) mit Druckstelleinrichtungen zu deren Druckbeaufschlagung oder Entlüftung verbunden sind und ein Anschluss (32) mit einem drucklosen Bereich (41) verbunden ist.

4. Hydraulische Steuerungsvorrichtung nach Anspruch 3, **dadurch gekennzeichnet, dass** die Ventilbohrung (39) des Absperrventils (1) in radialer Richtung von vier Druckräumen (31, 32, 33, 34) durchdrungen ist, wobei im ersten Druckraum (31) der Sperrdruck (p_S) auf die erste Wirkfläche (A_1) wirksam ist, der zweite Druckraum (32) entlüftet ist, der dritte Druckraum (33) direkt mit dem Schaltelement (K) verbunden ist und der vierte Druckraum (34) von einem Kupplungsventildruck (p_V) beaufschlagbar ist, wobei am Gehäuse (30) zwischen dem dritten (33) und dem vierten Druckraum (34) ein kreis- oder ringförmiger Dichtsitz (38) ausgebildet ist, an welcher der Sitzkolben (20) in der ersten Schaltstellung anliegt, wodurch der dritte (33) vom vierten Druckraum (34) getrennt ist, so dass ein Bereich der axialen Projektionsfläche an dem zweiten Ende des Sitzkolbens (20) radial außerhalb des Dichtsitzes (38) im dritten Druckraum (33) von dem Kupplungsdruck (p_K) beaufschlagbar ist und eine zweite ringförmige Wirkfläche (A_2) bildet, und ein anderer Bereich der axialen Projektionsfläche am zweiten Ende des Sitzkolbens (20) innerhalb des von dem Dichtsitz (38) beschriebenen Kreises im vierten Druckraum (34) von dem Kupplungsventildruck (p_V) beaufschlagbar ist und eine dritte Wirkfläche (A_3) bildet, und dass in der zweiten Schaltstellung des Absperrventils (1) der dritte (33) und der vierte Druckraum (34) miteinander verbunden sind und damit der Kupplungsdruck (p_K) dem Kupplungsventildruck (p_V) entspricht und auf die zweite (A_2) und dritte Wirkfläche (A_3) am zweiten Ende des Sitzkolbens (20) wirksam ist.

5. Hydraulische Steuerungsvorrichtung nach Anspruch 4, **dadurch gekennzeichnet, dass** der Sitzkolben mehrere zylindrische Kolbenabschnitte aufweist, wobei am ersten Ende des Sitzkolbens an einem ersten Kolbenabschnitt eine kreisquerschnittsförmige Stirnfläche ausgebildet ist, wobei der erste Kolbenabschnitt den Zylinder mit dem größten Durchmesser aufweist, und am zweiten Ende mindestens ein Zylinder kleineren Durchmessers ausgebildet ist, wobei der Übergang von zweiten zum dritten Kolbenabschnitt eine Ringfläche bildet, welche mit dem Gehäuse zwischen dem dritten und vierten Druckraum einen ringförmigen Dichtsitz bildet.

6. Hydraulische Steuerungsvorrichtung nach Anspruch 5, **dadurch gekennzeichnet, dass** der ringförmige Dichtsitz als Flachsitz mit einer Elastomerdichtung ausgeführt ist, wobei die Elastomerdichtung am Gehäuse und/oder am Sitzkolben angeordnet ist.

7. Hydraulische Steuerungsvorrichtung nach Anspruch 4, **dadurch gekennzeichnet, dass** der Sitzkolben (20) mehrere Kolbenabschnitte aufweist, wobei am ersten Ende des Sitzkolbens (20) an einem ersten zylindrischen Kolbenabschnitt (24) eine kreisquerschnittsförmige Stirnfläche (A_1) ausgebildet ist, wobei der erste Kolbenabschnitt (24) den Zylinder mit dem größten Durchmesser (d_1) aufweist, und dass der Sitzkolben (20) zu seinem zweiten Ende hin einen zweiten zylindrischen Kolbenabschnitt (25) mit einem kleineren Durchmesser (d_2) aufweist und benachbart zum zweiten Kolbenabschnitt (25) einen dritten Kolbenabschnitt (26) aufweist, welcher sich kegel- oder kegelstumpfförmig oder sphärisch zum zweiten Ende verjüngend ausgebildet ist.

8. Hydraulische Steuerungsvorrichtung nach Anspruch 5 oder 7, **dadurch gekennzeichnet, dass** zwischen dem entlüfteten zweiten (32) und dem dritten (33) Druckraum an einer Innenkontur des Gehäuses und/oder an einer zylindrischen Außenkontur des Sitzkolbens ein Dichtelement (35) angebracht ist, um Leckagen von dem Schaltelement (K) zu dem entlüfteten zweiten Druckraum (32) zu verhindern.

9. Hydraulische Steuerungsvorrichtung nach einem des Ansprüche 4 bis 8, **dadurch gekennzeichnet, dass** das Verhältnis der drei Wirkflächen (A_1, A_2, A_3) zueinander so gewählt ist, dass ein Sperrdruck (p_S), der geringer ist als der Kupplungsdruck (p_K) ausreichend ist, um das Absperrventil (1) entgegen der Summe der Kräfte aus dem für die Übertragung des maximalen Drehmoments ausreichenden Kupplungsdruck (p_K) und dem Kupplungsventildruck (p_V) in der ersten Schaltstellung zu halten.

10. Hydraulische Steuerungsvorrichtung nach Anspruch 9, **dadurch gekennzeichnet, dass** der bestimmte ausreichende Wert des Sperrdrucks (p_S) maximal 3 bar beträgt.

11. Hydraulische Steuerungsvorrichtung nach einem der vorangegangenen Ansprüche, **dadurch gekennzeichnet, dass** zwischen dem zweiten Ende des Sitzkolbens (20) und dem benachbarten Ende der Ventilbohrung (39) eine Druckfeder (28) angeordnet ist, die zusätzlich zu dem Kupplungsventildruck (p_V) auf den Sitzkolben (20) eine Kraft in Richtung der zweiten Schaltstellung ausübend ist.

12. Hydraulische Steuerungsvorrichtung nach Anspruch 9, 10 oder 11, **dadurch gekennzeichnet, dass** beim Stillstand der Pumpe (P) oder bei Unterschreitung eines bestimmten Wertes des von der Pumpe erzeugten Drucks (p_SYS) das Absperrventil (1) selbsttätig durch die Wirkung des eingesperrten Schaltelementdrucks (p_K) und/oder die Wirkung der Kraft der Druckfeder (28) in die zweite Schaltstellung verschiebbar ist, in welcher das jeweilige Schaltelement (p_K) mit dem restlichen Hydrauliksystem (HSG, 41), und damit der Pumpe (P), verbunden und das Schaltelement (K) geöffnet ist.

13. Hydraulische Steuerungsvorrichtung nach Anspruch 11, **dadurch gekennzeichnet, dass** das Verhältnis der drei Wirkflächen (A_1, A_2, A_3) zueinander so gewählt ist, dass ein Sperrdruck (p_S), der geringer ist als der Kupplungsdruck (p_K) ausreichend ist, um das Absperrventil (1) entgegen der Summe der Kräfte aus dem für die Übertragung des maximalen Drehmoments ausreichenden Kupplungsdruck (p_K), dem Kupplungsventildruck (p_V) und der Kraft der Druckfeder (28) in der ersten Schaltstellung zu halten.

14. Hydraulische Steuerungsvorrichtung nach einem der vorangegangenen Ansprüche, **dadurch gekennzeichnet, dass** ein Absperrventil (101A, 101B, 101C, 101D, 101E) jeweils nur einem Schaltelement (K_A, K_B, K_C, K_D, K_E) zugeordnet ist, und wobei die hydraulische Steuerungsvorrichtung eine Sperrdruckstelleinrichtung (105) aufweist, durch welche alle Absperrventile (101A, 101B, 101C, 101D, 101E) mit einem gleichen Sperrdruck (p_S) aus einer Druckstelleinrichtung beaufschlagt werden.

15. Hydraulische Steuerungsvorrichtung nach einem der Ansprüche 1 bis 13, **dadurch gekennzeichnet, dass** eine erste Sperrdruckstelleinrichtung für die Betätigung der Absperrventile eines Teils der Schaltelemente des Automatikgetriebes und eine weitere Sperrdruckstelleinrichtung für die Betätigung der Absperrventile eines weiteren Teils der Schaltelement des Automatikgetriebes vorgesehen ist, so dass voneinander unabhängige, unterschiedliche Sperrdrücke einstellbar sind.

16. Hydraulische Steuerungsvorrichtung nach einem der vorangegangenen Ansprüche, **dadurch gekennzeichnet, dass** das mindestens ein weiteres Absperrventil derart ausgebildet und in dem Hydrauliksystem angeordnet ist, dass dieses durch die Kraft eines von der Pumpe (P) erzeugten Sperrdrucks (p_S) in der zweiten Schaltstellung gehalten wird und beim Stillstand der Pumpe (P) bzw. bei Unterschreitung eines bestimmten Wertes des Sperrdrucks das Absperrventil selbsttätig in die erste Schaltstellung verschiebbar ist, in welcher das jeweilige Schaltelement (K) zur jeweiligen Druckstelleinrichtung hin dicht verschlossen ist.

17. Automatikgetriebe mit einer hydraulischen Steuerungsvorrichtung nach einem der vorangegangenen Ansprüche.

18. Automatikgetriebe nach Anspruch 17, **dadurch gekennzeichnet, dass** mindestens ein Schaltelement so ausgebildet ist, dass dieses geöffnet ist, wenn der Betätigungsdruck (p_K) einen bestimmten Wert unterschreitet.

19. Verfahren zur Steuerung eines Automatikgetriebes nach Anspruch 17 oder 18, wobei ausgehend von einem Betriebszustand, in welchem ein Schaltelement unter dem Kupplungsdruck (p_K, p_K1, p_K2) geschlossen ist, vor einer beabsichtigten Erhöhung des Kupplungsventildrucks (p_V, p_V1, p_V2) der Sperrdruck (p_S) derart angehoben wird, dass Absperrventil (1) erst in die zweite Schaltstellung bewegt wird, wenn der Kupplungsventildruck (p_V, p_V1, p_V2) größer oder gleich dem eingesperrten Kupplungsdruck (p_K, p_K1, p_K2) ist, und dass ausgehend von einem Betriebszustand, in welchem das Absperrventil (1) und damit das Schaltelement (K, K1, K2) geöffnet ist und nun das Schaltelement geschlossen werden soll, das Absperrventil geschlossen wird, nachdem der Kupplungsventildruck soweit angehoben wurde, dass das Schaltelement geschlossen ist, und dass nach dem Absenken des Kupplungsventildrucks der Sperrdruck auf einen Wert abgesenkt wird, der ausreichend ist um das Absperrventil entgegen dem Kupplungsdruck in der ersten Schaltstellung zu halten.

## Claims

1. Hydraulic control device for an automatic transmission comprising a plurality of frictional-locking shift elements (K), the hydraulic control device comprising at least one shut-off valve (1) assigned to a shift element and a plurality of pressure-adjusting devices respectively assigned to a shift element and also a shut-off pressure-adjusting device assigned to the shut-off valve (1), wherein, to form a transmission stage, there are to be kept closed at least two shift elements for transmitting a torque by means of the pressurization by a hydraulic activating pressure (p_K) generated by a pump (P) and adjusted in the pressure-adjusting device, wherein, at least in one operating state of the automatic transmission in which a transmission stage is engaged and no shifting occurs, the shut-off valve (1) is in a first shifting position in which at least the torque-transmitting shift element (K) is tightly closed off with respect to the respective pressure-adjusting device by means of the assigned shut-off valve (1), with the result that the actuating pressure (p_K) enclosed in the shift element (K) remains substantially constant or does not drop, **characterized in that** the at least one shut-off valve (1) is formed and arranged in the hydraulic system in such a way that it is held in the first shifting position by the force of a shut-off pressure (p_S) generated by the pump (P) and, upon a standstill of the pump (P), or when falling short of a defined value of the pressure generated by the pump (P), and thus of the shut-off pressure (p_S), the shut-off valve (1) is automatically displaceable at least through the effect of the locked-in shift element pressure (p_K) into a second shifting position in which the respective shift element (K) is connected to the respective pressure-adjusting device.

2. Hydraulic control device according to Claim 1, **characterized in that** the shut-off valve (1) is designed as a shiftable seat valve which comprises a seat piston (20) which is guided in an axially displaceable manner in a valve bore (39) formed in a housing (30), wherein the seat piston (20) has, at one end, a first effective area (A_1) which can be pressurized in axial projection by the shut-off pressure and has, at a second end, at least one further effective area (A_2, A_3) which can be pressurized in axial projection by a further pressure in the opposite displacement direction.

3. Hydraulic control device according to Claim 2, **characterized in that** the shut-off valve has four connections (31, 32, 33, 34), of which three connections (31, 33, 34) are connected to pressure-adjusting devices for pressurization or venting thereof and one connection (32) is connected to a pressureless region (41).

4. Hydraulic control device according to Claim 3, **characterized in that** the valve bore (39) of the shut-off valve (1) is penetrated in the radial direction by four pressure spaces (31, 32, 33, 34), wherein the shut-off pressure (p_S) acts on the first effective area (A_1) in the first pressure space (31), the second pressure space (32) is vented, the third pressure space (33) is connected directly to the shift element (K) and the fourth pressure space (34) can be pressurized by a clutch valve pressure (p_V), wherein a circular or annular sealing seat (38) is formed on the housing (30) between the third (33) and the fourth pressure space (34), on which sealing seat the seat piston (20) bears in the first shifting position, with the result that the third pressure space (33) is separated from the fourth pressure space (34) such that a region of the axial projection area on the second end of the seat piston (20) radially outside the sealing seat (38) in the third pressure space (33) can be pressurized by the clutch pressure (p_K) and forms a second annular effective area (A_2), and another region of the axial projection area on the second end of the seat piston (20) within the circle, which is described by the sealing seat (38), in the fourth pressure space (34) can be pressurized by the clutch valve pressure (p_V) and forms a third effective area (A_3), and **in that** the third (33) and the fourth pressure space (34) are connected to one another in the second shifting position of the shut-off valve (1) and thus the clutch pressure (p_K) corresponds to the clutch valve pressure (p_V) and acts on the second (A_2) and third effective area (A_3) on the second end of the seat piston (20).

5. Hydraulic control device according to Claim 4, **characterized in that** the seat piston has a plurality of cylindrical piston portions, wherein a cross-sectionally circular end face is formed on the first end of the seat piston on a first piston portion, wherein the first piston portion has the cylinder with the largest diameter, and at least one cylinder of smaller diameter is formed on the second end, wherein the transition from second to third piston portion forms an annular surface which forms an annular sealing seat with the housing between the third and fourth pressure space.

6. Hydraulic control device according to Claim 5, **characterized in that** the annular sealing seat is embodied as a flat seat with an elastomer seal, wherein the elastomer seal is arranged on the housing and/or on the seat piston.

7. Hydraulic control device according to Claim 4, **characterized in that** the seat piston (20) has a plurality of piston portions, wherein a cross-sectionally circular end face (A_1) is formed on the first end of the seat piston (20) on a first cylindrical piston portion (24), wherein the first piston portion (24) has the cylinder with the largest diameter (d_1), and **in that** the seat piston (20) has towards its second end a second cylindrical piston portion (25) with a smaller diameter (d_2) and, adjacent to the second piston portion (25), a third piston portion (26) which is designed to taper in a conical or frustoconical or spherical manner towards the second end.

8. Hydraulic control device according to Claim 5 or 7, **characterized in that** a sealing element (35) is mounted between the vented second (32) and the third (33) pressure space on an inner contour of the housing and/or on a cylindrical outer contour of the seat piston in order to prevent leakages from the shift element (K) to the vented second pressure space (32).

9. Hydraulic control device according to one of Claims 4 to 8, **characterized in that** the ratio of the three effective areas (A_1, A_2, A_3) to one another is selected such that a shut-off pressure (p_S) which is lower than the clutch pressure (p_K) is sufficient for the shut-off valve (1) to be held in the first shifting position counter to the sum of the forces made up of the clutch pressure (p_K) sufficient for the transmission of the maximum torque and the clutch valve pressure (p_V).

10. Hydraulic control device according to Claim 9, **characterized in that** the defined sufficient value of the shut-off pressure (p_S) is 3 bar at maximum.

11. Hydraulic control device according to one of the preceding claims, **characterized in that** a compression spring (28) is arranged between the second end of the seat piston (20) and the adjacent end of the valve bore (39), which compression spring, in addition to the clutch valve pressure (p_V) on the seat piston (20), exerts a force in the direction of the second shifting position.

12. Hydraulic control device according to Claim 9, 10 or 11, **characterized in that**, upon standstill of the pump (P), or when falling short of a defined value of the pressure (p_SYS) generated by the pump, the shut-off valve (1) can be automatically displaced into the second shifting position through the effect of the locked-in shift element pressure (p_K) and/or the effect of the force of the compression spring (28), in which shifting position the respective shift element (p_K) is connected to the rest of the hydraulic system (HSG, 41), and thus to the pump (P), and the shift element (K) is opened.

13. Hydraulic control device according to Claim 11, **characterized in that** the ratio of the three effective areas (A_1, A_2, A_3) to one another is selected such that a shut-off pressure (p_S) which is lower than the clutch pressure (p_K) is sufficient for the shut-off valve (1) to be held in the first shifting position counter to the sum of the forces made up of the clutch pressure (p_K) sufficient for transmitting the maximum torque, the clutch valve pressure (p_V) and the force of the compression spring (28).

14. Hydraulic control device according to one of the preceding claims, **characterized in that** a shut-off valve (101A, 101B, 101C, 101D, 101E) is respectively assigned only one shift element (K_A, K_B, K_C, K_D, K_E), and wherein the hydraulic control device has a shut-off pressure-adjusting device (105) by means of which all shut-off valves (101A, 101B, 101C, 101D, 101E) are pressurized by an identical shut-off pressure (p_S) from a pressure-adjusting device.

15. Hydraulic control device according to one of Claims 1 to 13, **characterized in that** a first shut-off pressure-adjusting device is provided for the actuation of the shut-off valves of a part of the shift element of the automatic transmission and a further shut-off pressure-adjusting device is provided for the actuation of the shut-off valves of a further part of the shift element of the automatic transmission, with the result that mutually independent, different shut-off pressures can be set.

16. Hydraulic control device according to one of the preceding claims, **characterized in that** the at least one further shut-off valve is formed and arranged in the hydraulic system in such a way that it is held in the second shifting position by the force of a shut-off pressure (p_S) generated by the pump (P) and, upon standstill of the pump (P), or when falling short of a defined value of the shut-off pressure, the shut-off valve can be displaced automatically into the first shifting position in which the respective shift element (K) is tightly closed with respect to the respective pressure-adjusting device.

17. Automatic transmission having a hydraulic control device according to one of the preceding claims.

18. Automatic transmission according to Claim 17, **characterized in that** at least one shift element is formed in such a way that it is opened if the actuating pressure (p_K) falls short of a defined value.

19. Method for controlling an automatic transmission according to Claim 17 or 18, wherein, starting from an operating state in which a shift element is closed under the clutch pressure (p_K, p_K1, p_K2), and before an intended increase in the clutch valve pressure (p_V, p_V1, p_V2), the shut-off pressure (p_S) is raised in such a way that the shut-off valve (1) is first moved into the second shifting position if the clutch valve pressure (p_V, p_V1, p_V2) is greater than or equal to the locked-in clutch pressure (p_K, p_K1, p_K2), and in that, starting from an operating state in which the shut-off valve (1) and thus the shift element (K, K1, K2) is opened and now the shift element is intended to be closed, the shut-off valve is closed after the clutch valve pressure has been raised to such an extent that the shift element is closed, and in that, after the decrease in the clutch valve pressure, the shut-off pressure is decreased to a value which is sufficient for holding the shut-off valve in the first shifting position counter to the clutch pressure.

## Revendications

1. Dispositif de commande hydraulique pour une transmission automatique, comprenant plusieurs éléments de commutation à engagement par friction (K), le dispositif de commande hydraulique comprenant au moins une vanne d'arrêt (1) associée à un élément de commutation et plusieurs dispositifs de réglage de pression associés chacun à un élément de commutation ainsi qu'un dispositif de réglage de pression d'arrêt associé à la vanne d'arrêt (1), pour réaliser un rapport de démultiplication au moins deux éléments de commutation pour le transfert d'un couple au moyen de la sollicitation par une pression d'actionnement hydraulique (p_K) générée par une pompe (P) et ajustée dans le dispositif de réglage de pression devant être maintenus fermés, au moins dans un état de fonctionnement de la transmission automatique dans lequel un rapport de démultiplication est enclenché et aucune commutation n'a lieu, la vanne d'arrêt (1) se trouvant dans un premier état de commutation dans lequel au moins l'élément de commutation transférant le couple (K) est fermé de manière étanche au moyen de la vanne d'arrêt associée (1) vers le dispositif de réglage de pression respectif, de telle sorte que la pression d'actionnement (p_K) établie dans l'élément de commutation (K) reste essentiellement constante ou ne chute pas, **caractérisé en ce que** l'au moins une vanne d'arrêt (1) est réalisée et est disposée dans le système hydraulique de telle sorte que celle-ci soit maintenue dans la première position de commutation par la force d'une pression d'arrêt (p_S) générée par la pompe (P), et à l'arrêt de la pompe (P), ou au passage en dessous d'une certaine valeur de la pression générée par la pompe (P), et par conséquent au passage en dessous de la pression d'arrêt (p_S), la vanne d'arrêt (1) pouvant être déplacée automatiquement, au moins par l'action de la pression renfermée (p_K) de l'élément de commutation, dans une deuxième position de commutation dans laquelle l'élément de commutation respectif (K) est connecté au dispositif de réglage de pression respectif.

2. Dispositif de commande hydraulique selon la revendication 1, **caractérisé en ce que** la vanne d'arrêt (1) est réalisée sous forme de vanne à siège commutable qui comprend un piston à siège (20) qui est guidé de manière déplaçable axialement dans un alésage de soupape (39) réalisé dans un boîtier (30), le piston à siège (20) présentant à une extrémité une première surface d'action (A_1) pouvant être sollicitée en projection axiale par la pression d'arrêt et à une deuxième extrémité au moins une surface d'action supplémentaire (A_2, A_3) pouvant être sollicitée en projection axiale dans la direction de déplacement opposée par une pression supplémentaire.

3. Dispositif de commande hydraulique selon la revendication 2, **caractérisé en ce que** la soupape d'arrêt présente quatre raccordements (31, 32, 33, 34) dont trois raccordements (31, 33, 34) sont connectés à des dispositifs de réglage de pression en vue de leur sollicitation ou de leur désaérage et dont un raccordement (32) est connecté à une région sans pression (41).

4. Dispositif de commande hydraulique selon la revendication 3, **caractérisé en ce que** l'alésage de soupape (39) de la soupape d'arrêt (1) est traversé dans la direction radiale par quatre espaces de pression (31, 32, 33, 34), dans le premier espace de pression (31), la pression d'arrêt (p_S) agissant sur la première surface d'action (A_1), le deuxième espace de pression (32) étant désaéré, le troisième espace de pression (33) étant connecté directement à l'élément de commutation (K) et le quatrième espace de pression (34) pouvant être sollicité par une pression de soupape d'accouplement (p_V), un siège d'étanchéité de forme circulaire ou annulaire (38) étant réalisé sur le boîtier (30) entre le troisième (33) et le quatrième (34) espace de pression, au niveau duquel siège d'étanchéité le piston à siège (20) s'applique dans la première position de commutation de telle sorte que le troisième espace de pression (33) soit séparé du quatrième espace de pression (34), de telle sorte qu'une région de la surface en projection axiale au niveau de la deuxième extrémité du piston à siège (20) puisse être sollicitée radialement à l'extérieur du siège d'étanchéité (38) dans le troisième espace de pression (33) par la pression d'accouplement (p_K) et forme une deuxième surface d'action annulaire (A_2), et qu'une autre région de la surface en projection axiale au niveau de la deuxième extrémité du piston à siège (20) à l'intérieur du cercle décrit par le siège d'étanchéité (38) dans le quatrième espace de pression (34) puisse être sollicitée par la pression de soupape d'accouplement (p_V) et forme une troisième surface d'action (A_3), et **en ce que** dans la deuxième position de commutation de la soupape d'arrêt (1), le troisième (33) et le quatrième (34) espace de pression sont connectés l'un à l'autre et par conséquent la pression d'accouplement (p_K) correspond à la pression de soupape d'accouplement (p_V) et agit sur la deuxième (A_2) et la troisième (A_3) surface d'action au niveau de la deuxième extrémité du piston à siège (20).

5. Dispositif de commande hydraulique selon la revendication 4, **caractérisé en ce que** le piston à siège présente plusieurs portions de piston cylindriques, une surface frontale de section transversale circulaire étant réalisée au niveau de la première extrémité du piston à siège sur une première portion de piston, la première portion de piston présentant le cylindre ayant le plus grand diamètre, et au moins un cylindre de plus petit diamètre étant réalisé au niveau de la deuxième extrémité, la transition de la deuxième à la troisième portion de piston formant une surface annulaire qui forme avec le boîtier un siège d'étanchéité annulaire entre le troisième et le quatrième espace de pression.

6. Dispositif de commande hydraulique selon la revendication 5, **caractérisé en ce que** le siège d'étanchéité annulaire est réalisé sous forme de siège plat avec un joint d'étanchéité en élastomère, le joint d'étanchéité en élastomère étant disposé au niveau du boîtier et/au niveau du piston à siège.

7. Dispositif de commande hydraulique selon la revendication 4, **caractérisé en ce que** le piston à siège (20) présente plusieurs portions de piston, une surface frontale de section transversale circulaire (A_1) étant réalisée au niveau de la première extrémité du piston à siège (20) sur une première portion de piston cylindrique (24), la première portion de piston (24) présentant le cylindre ayant le plus grand diamètre (d_1), et **en ce que** le piston à siège (20) présente vers sa deuxième extrémité une deuxième portion de piston cylindrique (25) avec un plus petit diamètre (d_2) et présente, à côté de la deuxième portion de piston (25), une troisième portion de piston (26) qui est réalisée de manière à se rétrécir sous forme conique ou tronconique ou sous forme sphérique vers la deuxième extrémité.

8. Dispositif de commande hydraulique selon la revendication 5 ou 7, **caractérisé en ce qu'**entre le deuxième (32) et le troisième (33) espace de pression désaérés, au niveau d'un contour intérieur du boîtier et/ou au niveau d'un contour extérieur cylindrique du piston à siège, est installé un élément d'étanchéité (35) afin d'empêcher des fuites depuis l'élément de commutation (K) vers le deuxième espace de pression désaéré (32).

9. Dispositif de commande hydraulique selon l'une quelconque des revendications 4 à 8, **caractérisé en ce que** le rapport des trois surfaces actives (A_1, A_2, A_3) les unes par rapport aux autres est choisi de telle sorte qu'une pression d'arrêt (p_S), qui est inférieure à la pression d'accouplement (p_K), soit suffisante pour maintenir la soupape d'arrêt (1) dans la première position de commutation à l'encontre de la somme des forces constituées par la pression d'accouplement (p_K) suffisante pour transférer le couple maximal et la pression de soupape d'accouplement (p_V).

10. Dispositif de commande hydraulique selon la revendication 9, **caractérisé en ce que** la valeur déterminée suffisante de la pression d'arrêt (p_S) vaut au maximum 3 bars.

11. Dispositif de commande hydraulique selon l'une quelconque des revendications précédentes, **caractérisé en ce qu'**entre la deuxième extrémité du piston à siège (20) et l'extrémité adjacente de l'alésage de soupape (39) est disposé un ressort de compression (28) qui exerce en plus de la pression de soupape d'accouplement (p_V) sur le piston à siège (20) une force orientée dans la direction de la deuxième position de commutation.

12. Dispositif de commande hydraulique selon la revendication 9, 10 ou 11, **caractérisé en ce qu'**à l'arrêt de la pompe (P) ou en cas de passage en dessous d'une valeur déterminée de la pression générée par la pompe (p_SYS), la soupape d'arrêt (1) peut être déplacée automatiquement par l'action de la pression renfermée (p_K) de l'élément de commutation et/ou par l'action de la force du ressort de compression (28), dans la deuxième position de commutation dans laquelle l'élément de commutation respectif (p_K) est connecté au système hydraulique résiduel (HSG, 41) et par conséquent à la pompe (P), et l'élément de commutation (K) est ouvert.

13. Dispositif de commande hydraulique selon la revendication 11, **caractérisé en ce que** le rapport des trois surfaces actives (A_1, A_2, A_3) les unes par rapport aux autres est choisi de telle sorte qu'une pression d'arrêt (p_S), qui est inférieure à la pression d'accouplement (p_K), soit suffisante pour maintenir la soupape d'arrêt (1) dans la première position de commutation à l'encontre de la somme des forces constituées par la pression d'accouplement (p_K) suffisante pour transférer le couple maximal, la pression de soupape d'accouplement (p_V) et la force du ressort de compression (28).

14. Dispositif de commande hydraulique selon l'une quelconque des revendications précédentes, **caractérisé en ce qu'**une soupape d'arrêt (101A, 101B, 101C, 101D, 101E) est associée à chaque fois à seulement un élément de commutation (K_A, K_B, K_C, K_D, K_E), et le dispositif de commande hydraulique présentant un dispositif de réglage de pression d'arrêt (105) par le biais duquel toutes les soupapes d'arrêt (101A, 101B, 101C, 101D, 101E) sont sollicitées avec une même pression d'arrêt (p_S) à partir d'un dispositif de réglage de pression.

15. Dispositif de commande hydraulique selon l'une quelconque des revendications 1 à 13, **caractérisé en ce qu'**un premier dispositif de réglage de pression d'arrêt pour l'actionnement des soupapes d'arrêt d'une première partie des éléments de commutation de la transmission automatique et un dispositif de réglage de pression d'arrêt supplémentaire pour l'actionnement des soupapes d'arrêt d'une autre partie de l'élément de commutation de la transmission automatique sont prévus, de telle sorte que des pressions d'arrêt différentes, indépendantes les unes des autres, puissent être ajustées.

16. Dispositif de commande hydraulique selon l'une quelconque des revendications précédentes, **caractérisé en ce que** l'au moins une soupape d'arrêt supplémentaire est réalisée et disposée dans le système hydraulique de telle sorte que celle-ci soit maintenue dans la deuxième position de commutation par la force d'une pression d'arrêt (p_S) générée par la pompe (P), et à l'arrêt de la pompe (P), ou au passage en dessous d'une certaine valeur de la pression d'arrêt, la soupape d'arrêt puisse être déplacée automatiquement dans la première position de commutation dans laquelle l'élément de commutation respectif (K) est fermé hermétiquement vers le dispositif de réglage de pression respectif.

17. Transmission automatique comprenant un dispositif de commande hydraulique selon l'une quelconque des revendications précédentes.

18. Transmission automatique selon la revendication 17, **caractérisée en ce qu'**au moins un élément de commutation est réalisé de telle sorte que celui-ci soit ouvert quand la pression d'actionnement (p_K) passe en dessous d'une valeur déterminée.

19. Procédé de commande d'une transmission automatique selon la revendication 17 ou 18, dans lequel, à partir d'un état de fonctionnement dans lequel un élément de commutation est fermé en dessous de la pression d'accouplement (p_K, p_K1, p_K2), avant une augmentation attendue de la pression de soupape d'accouplement (p_V, p_V1, p_V2), la pression d'arrêt (p_S) est augmentée de telle sorte que la soupape d'arrêt (1) soit seulement déplacée dans la deuxième position de commutation quand la pression de soupape d'accouplement (p_V, p_V1, p_V2) est supérieure ou égale à la pression d'accouplement renfermée (p_K, p_K1, p_K2), et en ce qu'à partir d'un état de fonctionnement dans lequel la soupape d'arrêt (1) et par conséquent l'élément de commutation (K, K1, K2) est ouvert(e) et l'élément de commutation doit alors être fermé, la soupape d'arrêt est fermée après que la pression de soupape d'accouplement a été augmentée dans une mesure telle que l'élément de commutation soit fermée, et après la diminution de la pression de soupape d'accouplement, la pression d'arrêt est réduite à une valeur qui est suffisante pour maintenir dans la première position de commutation la soupape d'arrêt à l'encontre de la pression d'accouplement.
